# EUROPÄISCHE PATENTSCHRIFT

(11) **EP 0 989 910 B1**
(45) Veröffentlichungstag und Bekanntmachung des Hinweises auf die Patenterteilung: **19.03.2003**
(21) Anmeldenummer: 98940076.7
(22) Anmeldetag: 19.06.1998
(51) Int. Cl.: B01L 3/00, G01N 1/34

(54) **DIFFERENTIELLE VAKUUMKAMMER ZUM GERICHTETEN TRANSPORT EINER SUBSTANZ**
DIFFERENTIAL VACUUM CHAMBER FOR DIRECTED TRANSPORT OF A SUBSTANCE
CHAMBRE A VIDE DIFFERENTIELLE DESTINEE AU TRANSPORT DIRIGE D'UNE SUBSTANCE

(30) Priorität: 19.06.1997 DE 19725894
(43) Veröffentlichungstag der Anmeldung: 05.04.2000
(73) Patentinhaber: Gesellschaft für Biotechnologische Forschung mbH (GBF), 38124 Braunschweig (DE)
(72) Erfinder: BLÖCKER, Helmut, D-38124 Braunschweig (DE); KAUER, Gerhard, D-38124 Braunschweig (DE)
(74) Vertreter: Boeters, Hans Dietrich, Dr.
(86) Internationale Anmeldenummer: EP9803763
(87) Internationale Veröffentlichungsnummer: WO98057746

(56) Entgegenhaltungen:
- EP-A- 0 308 231
- EP-A- 0 359 249
- EP-A- 0 743 524
- WO-A-97/10055
- JP-A- 9 047 278
- US-A- 5 620 894

## Beschreibung

Die vorliegende Erfindung betrifft ein Vakuumsystem unter Verwendung der Vakuumkammer zum gerichteten Transport einer Substanz, insbesondere einer Flüssigkeit, und deren Verwendung zur automatischen Plasmidpräparation.

In den vergangenen Jahren wuchs das Ausmaß der Anstrengungen, die komplette Erbinformation ganzer Organismen zu erhalten. Beginnend mit der Sequenzierung eines Phagengenoms (Bakteriophage T7: 38000 Basenpaare, Bakteriophage h: 48514 Basenpaare), über das Genom von Escherichia coli (4.2 x 106 Basenpaare) bis hin zur Hefe Saccharomyces cerevisiae (2.3 × 107 Basenpaare) als ersten Vertreter der Eukaryonten steigerte sich die Anzahl der zu sequenzierenden Basenpaare um das fast 600-fache. Mittlerweile ist das Erbgut des Menschen mit mehr als 3 × 109 Basenpaaren im "Human Genome Project" Ziel dieser Anstrengungen geworden. Die enormen Mengen zu sequenzierender DNA können mit den bisherigen Labormitteln und Laborpersonal kaum bewältigt werden. So sind neue Technologien gefragt, die den Probendurchsatz in diesen Forschungsvorhaben bei vertretbarem finanziellem Aufwand erheblich erhöhen können. Dabei treten in der laufenden Entwicklung zwei sich gegenseitig beeinflussende Strategien zutage: nämlich einerseits die Miniaturisierung der Laborabläufe und andererseits die unüberwachte Automatisierung bewährter Laborprozeduren.

Bei der Miniaturisierung von Laborabläufen gibt es miniaturisierte Elektrophoreseanalysatoren, in denen die Trennung von Biomolekülen aufgrund ihrer Ladung und Größe ausgenutzt wird. Derartige miniaturisierte Elektrophoreseanalysatoren werden mittels Mikrostrukturen in Elektrophoresechips realisiert. Ferner gibt es miniaturisierte PCR-Maschinen, wobei bei der Polymerase-Kettenreaktion (Polymerase Chain Reaction = PCR) bis zu 6 Kilobasen große DNA-Fragmente vervielfacht werden.

Ferner sind miniaturisierte Probenarrays und miniaturisierte Detektionssysteme bekannt. Diese beschriebenen miniaturisierten Elemente können zu größeren Einheiten zusammengefaßt werden, so daß man zu einer kompletten miniaturisierten Laboreinheit kommt.

Andererseits ist es zur Automatisierung eines Labors nicht zwingend notwendig, die Routineverfahren zu miniaturisieren. Es ist ebenfalls möglich, ein Robotersystem zu konzipieren, das die manuellen Tätigkeiten des Menschen ganz oder teilweise ersetzt, um eine Steigerung des Probendurchsatzes zu erreichen. Die folgenden manuellen Tätigkeiten sind typisch für eine Laborpräparation (mit besonderem Schwerpunkt auf Plasmidpräparation als Vorbereitung zur PCR-Sequenzierung) und müssen durch geeignete Roboter gewährleistet sein:
- Pipettieren
- Transport von Verbrauchsmaterial und Chemikalien
- Durchsaugen von Flüssigkeiten durch Filter, Membranen, durchlässige Festkörper o.ä.
- PCR-Reaktion

Heutige Pipettierroboter lokalisieren auf einer Arbeitsfläche normiertes Labormaterial an definierten Positionen und ermöglichen so die Installation von erprobten Laborprotokollen. Beispielsweise können auf diese Maschinen über Hilfsroboter Mikrotiterplatten, Pipettenspitzen oder Reservoirs für Pufferlösungen usw. eingestellt, bzw. nach Gebrauch wieder aus dieser Arbeitsstation entfernt werden. So können alle notwendigen Pipettierschritte zur Vorbereitung einer PCR- oder einer Plasmidpräparation abgearbeitet werden, um dann das Produkt dieser Pipettierung zur weiteren Präparation über einen Greifroboter in eine entsprechende Maschine einzustellen.

Die Polymerase-Kettenreaktion (PCR) vervielfacht ein DNA-Segment, wenn es zwischen zwei definierten Primerstellen eingeschlossen ist. Werden gleiche Mengen an Primern eingesetzt, dann entstehen über die PCR doppelsträngige DNA- Kopien, wird hingegen ein Primer im Überschuß eingesetzt, dann erhält man diesen Überschuß entsprechend einzelsträngige Kopien der vervielfältigten DNA. Sowohl einzelsträngige als auch doppelsträngige DNA kann zur Sequenzierung eingesetzt werden. In sequenzierintensiven Projekten werden die zu analysierenden DNA-Fragmente in Plasmide kloniert, die dann zunächst in einem auf Agar wachsenden definierten Raster von Bakterienkolonien (Escherichia coli Blue) vorliegen. Auch das anschließende Aufnehmen der Kolonien aus diesem Raster in Kulturröhrchen kann automatisiert werden. Die lebenden Bakterienklone liefern dann über eine ca. 12 Stunden dauernde Inkubationszeit (37°C) genügend Material, um in einer Präparation die zur Sequenzierung notwendigen Plasmidkopien zu gewinnen. Die Gewinnung derartiger gereinigter Plasmide zur Sequenzierung wird beispielsweise durch die QIAWELL 96 Ultraplasmid-Reinigungsprozedur erreicht. In derartigen Plasmidpräparationsverfahren treten Filtriervorgänge auf, bei denen eine Flüssigkeit von einem Filter in mindestens einen zweiten Filter gerichtet transportiert werden muß und durch ihn entweder ebenfalls hindurchtritt oder einfach kontrolliert aufgefangen wird.

Aus der JP 09 047278 A ist ein Vakuumsystem bekannt, bei dem zwei übereinander angeordnete Filtereinrichtungen in einer Vakuumkammer angeordnet sind, wobei zwischen der oberen und der unteren Filtereinrichtung bzw. der unteren Filtereinrichtung und dem Boden der Vakuumkammer Vakuumbereiche ausgeführt sind, die getrennt voneinander evakuiert werden können, um eine Substanz in zwei Schritten filtern zu können. Eine ähnliche Anordnung ist in EP-A-0 359 249 dargestellt. In der JP 09 047278 A ist weiterhin die Möglichkeit beschrieben, die Vakuumkammer automatisch zu laden bzw. zu entladen. Bei diesen bekannten Vakuumkammern besteht jedoch die Gefahr, daß ein Schleichvakuum im unteren Vakuumbereich bei einer Evakuierung nur des oberen Vakuumbereichs auftritt.

Der Erfindung liegt daher die Aufgabe zugrunde, ein Vakuumsystem und ein Verfahren zur automatischen Plasmidpräparation mit einem solchen Vakuumsystem zu schaffen, bei den die Entstehung eines Schleichvakuums im unteren Vakuumbereich bei einer Evakuierung nur des oberen Vakuumbereichs verhindert wird.

Diese Aufgabe wird durch ein Vakuumsystem mit den Merkmalen des Anspruchs 1 und durch ein Verfahren mit den Merkmalen des Anspruchs 34 gelöst. Bevorzugte Ausgestaltungen der Erfindung sind Gegenstand der abhängigen Ansprüche.

Gemäß der vorliegenden Erfindung sind in einer Vakuumkammer ein erstes permeables Mittel und ein zweites permeables Mittel eingesetzt, so daß mindestens zwei unabhängig voneinander einstellbare Vakuumbereiche definiert werden, nämlich ein erster Vakuumbereich zwischen dem ersten permeablen Mittel und dem zweiten permeablen Mittel und ein zweiter Vakuumbereich zwischen dem zweiten permeablen Mittel und dem Boden der Vakuumkammer, und in den beiden Vakuumbereichen unabhängig voneinander Vakuum erzeugt werden kann, so daß die Substanz, insbesondere die Flüssigkeit, in einem ersten Schritt aus dem ersten permeablen Mittel in das zweite permeable Mittel gesaugt werden kann und in einem zweiten Schritt aus dem zweiten permeablen Mittel in den unteren Vakuumbereich gesaugt werden kann. Unter Fluiden werden hier Gase, Flüssigkeiten, Dämpfe und Rauch verstanden.

Im allgemeinen weist die erfindungsgemäße Vakuumkammer genau zwei Vakuumbereiche auf. Es sind jedoch auch mehr als zwei Vakuumbereiche möglich, falls beispielsweise mehrere Filterungen direkt nacheinander vorgenommen werden sollen.

Ferner werden die permeablen Mittel durch Filterträger mit einer Vielzahl von Filterelementen gebildet, so daß Flüssigkeit definiert von einem bestimmten Filterelement des ersten Filterträgers in ein entsprechendes Filterelement des zweiten Filterträgers transportiert werden kann und durch diesen wiederum in den zweiten unteren Bereich der Vakuumkammer.

Weiterhin besteht die Vakuumkammer aus einem Deckel und einem Unterteil, wobei das Unterteil der Vakuumkammer einen Absatz zur Aufnahme des unteren Filterträgers aufweist. Ferner sind in den Seitenwänden der Kammer Aussparungen für den Greifer des Roboters vorgesehen, um die Filterplatten bzw. Filterträger automatisch einsetzen und entnehmen zu können. Zur exakten Aufnahme und Führung der Filterträger weist das Unterteil der Vakuumkammerführungslaschen mit korrigierenden Phasen auf. Vorzugsweise haben die Führungslaschen zwei unterschiedliche Phasenwinkel, wobei der erste Phasenwinkel ca. 30° und der zweite Phasenwinkel ca. O° - 2° beträgt. Weiterhin können die Führungskanten der Wand, mit der die Filterträger beim Einsetzen in Berührung kommen, abgephast sein. Vorzugsweise weist der Deckel eine abgephaste Führungskante auf, so daß der Deckel beim Aufsetzen an der Führungskante des Deckels zentriert wird. Vorzugsweise beträgt der Kantenphasenwinkel 30°. Ferner weist der Deckel im Wandbereich Aussparungen für den Robotergreifer sowie eine Auflagefläche für den oberen Filterträger auf.

Das Verdichtungsmaterial für den oberen Filterhalter weist vorzugsweise eine Härte von ca. 20 Shore auf, wobei ferner an der Verbindungsstelle Deckel/Unterteil die Verdichtung aus einer Kombination O-Ring und elastischem Dichtungsband gebildet wird, wobei der O-Ring mit ca. 60 Shore und das Dichtungsband mit ca. 30 Shore dichtet. Weiterhin wird am unteren Filterträger über eine 60 Shore harte Gummiauflage verdichtet.

Das Oberteil weist entsprechende Aufnahmen zum Aufnehmen der Führungslaschen auf, so daß der Deckel mittels der Führungslaschen auf dem Unterteil zentriert wird.

In einer bevorzugten Ausführungsform weisen die Filterträger N, wobei N insbesondere 96 beträgt, schlotförmige Einzelfilter auf, die zu einem Filterträger verbunden sind. Ferner sind auf den entsprechenden vier Eckschlöten der beiden Filterträger Abstandshülsen angebracht, die neben ihrer Funktion der Definition des ersten Vakuumbereichs die vertikale Korrektur von Fehlstellungen des unteren Filterträgers korrigieren, indem sie in Zentrierschächte des Vakuumunterteiles eingreifen. Die Abstandshülsen haben vorzugsweise eine teilzylindrische Form, um das Vakuum auf die Eckschlöte einwirken zu lassen. Ferner können die Abstandshülsen angephast sein, so daß eine zusätzliche Zentrierung der Filterträger beim Einsetzen erzielt wird. Ein Filterträger kann einstückig aus einer Vielzahl Filterelemente bestehen, oder auch aus einer Vielzahl einzelner Filterelemente zusammengesetzt sein.

Vorzugsweise ist die Länge der Abstandshülsen derartig gewählt, daß sich die Auslaßspitzen des oberen Filterträgers innerhalb der Schlote des unteren Filterträgers befinden, so daß ein kontrollierter Transport der Flüssigkeit durch miteinander korrespondierende Schlote oder Elemente erzielt wird. Vorzugsweise befinden sich die Auslaßspitzen der Elemente des oberen Filterträgers 1,5 mm innerhalb der entsprechenden Schlote der Filterelemente des entsprechenden unteren Trägers. Dadurch wird ein Kontaminieren nicht-korrespondierender Elemente vermieden.

Vorzugsweise sind die Vakuumkammer und die Abstandshülsen aus Plexiglas entsprechender Stärke gefertigt, was eine optische Kontrolle zuläßt. Zur industriellen Herstellung kann die Vakuumkammer aus einem gegossenen Kunststoff bestehen, was eine kostengünstige Fertigung ermöglicht. Spritzgußverfahren, Fräsverfahren können ebenfalls verwendet werden.

In dem Unterteil der Vakuumkammer ist ein Absaugschacht für den ersten Vakuumbereich und ein Absaugschacht für den zweiten Vakuumbereich angeordnet. Durch den Absaugschacht des zweiten Vakuumbereichs wird bei einer Filtration durchtretende Flüssigkeit direkt aus der Vakuumkammer entfernt.

Gemäß der vorliegenden Erfindung weist ein Vakuumsystem mindestens eine Vakuumpumpe und ein elektronisch geregeltes Ventil für den unteren Kammerbereich, ein elektronisch geregeltes Ventil für den mittleren Kammerbereich, ein Ventil zur Zerstörung des Schleichvakuums im unteren Kammerbereich und eine zwischen den Ventilen und dem Anschluß an den unteren Bereich der Vakuumkammer eingelassener Vakuumfalle zur Aufnahme des Abfallvolumens auf. Dabei kann jedes Proportionalventil über eine eigene Ansteuerelektronik verfügen, die von der Kontrollsoftware über ein Decodiergerät von einem PC angesteuert werden kann.

Weiterhin ist gemäß der Erfindung eine automatische Plasmidpräparation mit dem Vakuumsystem zur Automatisierung eines gerichteten Substanztransports, einem Pipettierroboter und einem Greifroboter möglich, wobei der Greifroboter die Filterträger nach der Pipettierung durch den Pipettierroboter in die Vakuumkammer einsetzt und den Deckel schließt, sowie nach Filtrierung die Kammer öffnet und die Filterträger entnimmt und der Weiterverarbeitung zuführt. Eine derartige Vorrichtung wird vorzugsweise von einem Rechner gesteuert. Es ist auch möglich, nur mit einem Roboter zu arbeiten, der die Greif- und Pipettierfunktionen übernimmt.

Weiterhin weist die Vorrichtung einen Trockner für Filterträger auf, da bei einigen Präparationsverfahren der letzte Präparationsschritt ein Waschen mit Alkohol ist, so daß der an dem letzten Träger anhaftende Restalkohol entfernt werden muß.

Vorteilhafterweise ist die Vakuumkammer Teil eines größeren Robotersystems, das zur Unterstützung aller gängigen Präparationsmethoden molekularbiologischer Verfahren eingesetzt werden kann. Daher wurde ein modulares Design verwirklicht, das es ermöglicht, die apparativen Komponenten der Vorrichtung zur automatischen Präparation auf die jeweilige Fragestellung einzurichten. Ferner ist das eingesetzte Robotersystem nicht rückgekoppelt, was bedeutet, daß keine visuelle oder andere sensorische Kontrolle über den aktuellen Ist-Zustand möglich ist. Daher müssen sich alle beweglichen Komponenten des Systems an möglichst exakt definierten Positionen befinden. Werden Komponenten durch einen Roboterarm bewegt, dann ist es wichtig, daß sich diese bewegten Komponenten bei ihrer erneuten Wiederaufnahme durch den Roboter an genau definierten Positionen befinden. Die Vakuumkammer ist zudem als Modul aus dem System entfernbar, damit an ihrer Position andere Modulsysteme für andere Methoden eingesetzt werden können. Daher richtet sich die Plazierung aller Hilfssysteme für die automatisierte Präparation am Pipettierroboter aus. Um daher während der "Lernphase" des Systems die aktuelle Position des Greifroboters optisch kontrollieren zu können, wird vorteilhafterweise die Vakuumkammer aus Plexiglas oder einem anderen durchsichtigen Kunststoff gefertigt. Es ist jedoch auch ohne weiteres möglich, ein rückgekoppeltes Robotersystem zu verwenden, bei dem die Rückkopplung durch Sensoren bewirkt wird.

Durch die Verwendung des Vakuums ist es möglich, Flüssigkeit in zwei zeitlich wohldefinierten Schritten aus einem Filter in beispielsweise einen darunter befindlichen zweiten Filter zu transportieren, um durch diesen in den untersten Bereich abgesaugt und entsorgt zu werden.

Die Erfindung, insbesondere die Vakuumkammer mit ihren mindestens zwei voneinander unabhängigen Vakuumbereichen ist jedoch nicht auf den Flüssigkeitstransport in der Filtrierphase einer Plasmidpräparation begrenzt. Andere Anwendungen wären die Trennung von Gemischen, das Auslösen von Reaktionen, Herstellen von Adsorptionsvorgängen durch die, allgemein ausgedrückt, Automatisierung eines gerichteten Substanztransports durch das Bereitstellen von mindestens zwei unabhängig voneinander einstellbaren Vakuumbereichen. Dabei ist unter Substanz ein einzelner Stoff oder ein Stoffgemisch in der Form einer Flüssigkeit, Gas oder Rauch zu verstehen. Ferner sind als permeable Mittel nicht nur Filterträger einsetzbar, sondern die Verwendung beispielsweise einer Arrays von miniaturisierten Chromatographiesäulen ist ebenfalls möglich, wodurch sich noch ein zeitlich aufgelöster Substanztransport verwirklichen läßt.

Bevorzugte Ausführungsformen der Erfindung werden im folgenden anhand der Zeichnungen erklärt.

Fig. 1 zeigt das Schema eines Verfahrensablaufs einer Plasmidreinigungsprozedur entsprechend einem Protokoll der Firma Qiagen,

Fig. 2 zeigt in perspektivischer Darstellung das Unterteil der Vakuumkammer,

Fig. 3 zeigt in perspektivischer Darstellung den Deckel der Vakuumkammer,

Fig. 4 zeigt eine Explosionszeichnung der erfindungsgemäßen Vakuumkammer,

Fig. 5 zeigt eine in der Vakuumkammer verwendete Zentrierlasche,

Fig. 6 zeigt eine Abstandshülse in Längsdarstellung, Querschnitt und Seitenaufriß,

Fig. 7 zeigt einen Querschnitt der Vakuumkammer mit eingesetzten Filterträgern und nicht geschlossenem Deckel,

Fig. 8 zeigt einen Querschnitt durch die Vakuumkammer mit eingesetzten Filterträgern und aufgesetztem Deckel,

Fig. 9 zeigt eine Schemadarstellung des Ventilsystems,

Fig. 10 zeigt eine Schemadarstellung der gesamten Vorrichtung zur automatischen Plasmidpräparation, und

Fig. 11 zeigt eine Schemadarstellung des Elektronikmoduls Vakuumkammer.

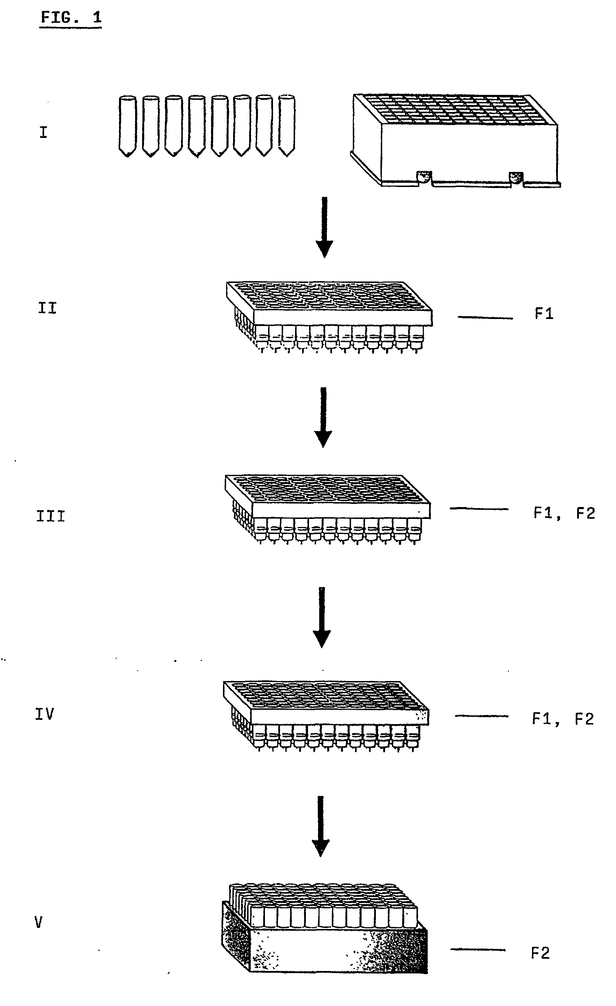

Fig. 1 zeigt das Ablaufschema einer Plasmidpräparation bzw. -Reinigung, wie dies beispielsweise seitens der Fa. Qiagen eingesetzt wird. Im Schritt I werden die zu analysierenden DNA-Fragmente in Plasmide kloniert, die dann zunächst in einem auf Agar wachsenden definierten Raster von Bakterienkolonie (Escherichia coli Blue) vorliegen. Die lebenden Bakterienklone liefern dann über eine ca. 12 Stunden dauernde Inkubationszeit bei 37 °C genügend Material, das nach dem folgenden Schema gereinigt wird. Die nach dem Zentrifugieren erhaltenen Pellets werden in den Röhrchen im Schritt I wieder aufgeschwemmt und lysiert. Die Proben werden jeweils in ein Filterelement eines Filterträgers (QIAfilter 96 (gelb)) im Schritt II pipettiert. In dem Filterträger des Schritts II werden die Zellwände etc. im Filter zurückgehalten, während die DNA-Stränge durch die Flüssigkeit in die entsprechenden Schlote des nächsten Filterträgers im Schritt III geschwemmt werden. In den Filterelementen dieses zweiten Filterträgers (QIAwell 96 (weiß)) des Schritts III adsorbiert die DNA an den Filtern, während die Filterflüssigkeit nach unten fließt. Mit einer Pufferflüssigkeit wird die DNA an den Filterelementen des zweiten Filterträgers gewaschen und durch einen Elutionspuffer in einen dritten Filterträger (QIAprep 96 (blau)) im Schritt IV verbracht. Von dort wird die DNA bzw. die Plasmide in einen Träger bestehend aus Auffangelementen im Schritt V eluiert. Diese in den einzelnen Röhrchen aufgefangenen Plasmide können auf eine PCR-Maschine gebracht werden (nicht dargestellt), um einerseits die Kopienzahl der DNA zu erhöhen und/oder andererseits eine PCR-Sequenzierung durchzuführen.

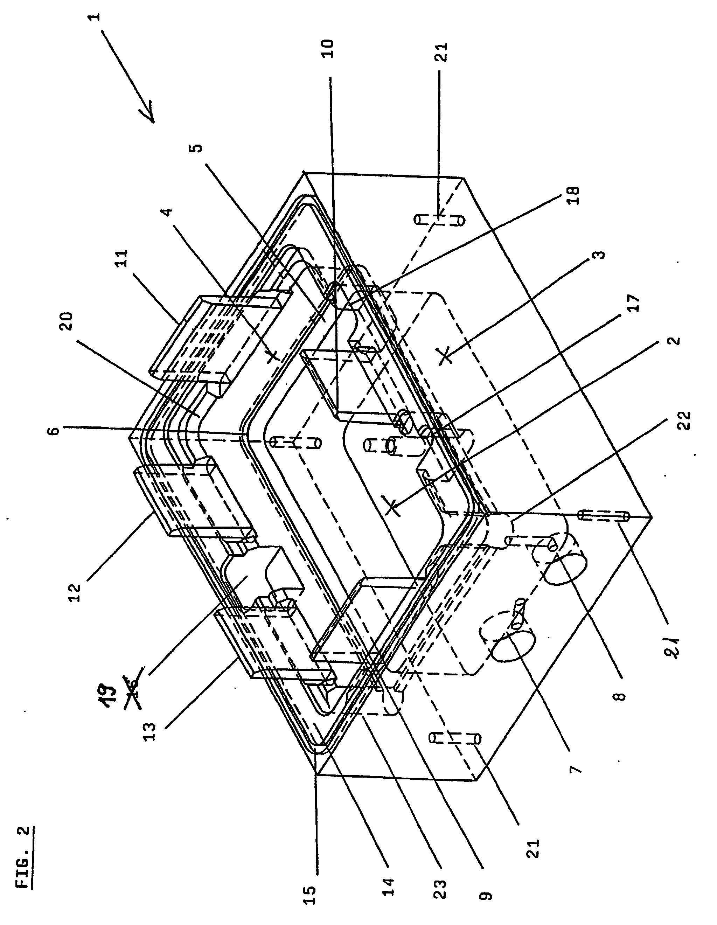

Fig. 2 zeigt in perspektivischer Darstellung eine Draufsicht auf das Unterteil 1 einer Vakuumkammer, die dazu dient, Flüssigkeit von einem oberen Filterträger (nicht dargestellt) in einen unteren Filterträger (nicht dargestellt) oder Auffangträger (nicht dargestellt) zu transportieren. Dadurch können die verschiedenen Filtrationsschritte II bis V des Plasmidreinigungsverfahrens nach beispielsweise dem Qiagen-Protokoll der Fig. 1 automatisch beispielsweise unter Verwendung eines Roboters ablaufen, wobei die Flüssigkeiten mittels Unterdruck von einem oberen in einen unteren Filterträger bzw. durch diesen hindurch gesaugt werden.

Das Unterteil 1 der Vakuumkammer V, umfaßt einen Innenraum 2, der in einen Kammerbodenteil 3 und einen Oberteil 4 unterteilt ist, wobei die Unterteilung durch einen umlaufenden Sims 5 vorgenommen wird, auf den der untere Filterträger bzw. Aufnahmeträger angeordnet wird. Durch diesen Sims 5 ist der Querschnitt des Kammerbodenteils 3 geringfügig kleiner als der des Oberteils 4. Entlang des Simses 5 ist wandseitig eine Nut 6 eingefräst, deren Bedeutung später erklärt werden wird. Das Unterteil 1 weist Absaugschächte 7, 8 auf, wobei der Absaugschacht 7 zur Absaugung des unteren Kammerbodenbereichs 3, dient, während der Absaugschacht 8 Vakuum im oberen Vakuumbereich zwischen dem oberen und unteren Filterträger erzeugt. Zur positionsgenauen Anordnung der Filterträger in die Vakuumkammer sind im oberen Bereich des Unterteils 1 Führungslaschen 9, 10, 11, 12 und 13 eingelassen, die über das Unterteil 1 herausragen. Ferner weist die obere Stirnfläche 14 des Unterteils 1 eine Nut 15 zur Aufnahme eines Dichtgummis (nicht dargestellt) auf. Die Führungslaschen 9 bis 13 sind mit korrigierenden Phasen versehen, so daß eine Zwangsjustierung des Filterträgers bei seinem Einsetzen vorgenommen wird. Um den Filterträger einsetzen zu können, sind in dem Unterteil 1 der Vakuumkammer in den gegenüberstehenden Seitenwänden Griffmulden 17, 18 und 19, in die Greiffinger einer Roboterhand eingreifen, vorgesehen. Weiterhin weist das Unterteil 1 korrigierende Phasen an den Führungskanten 20 der Kammer auf, die mit dem Filterträger bzw. an dem Filterträger befestigten Abstandshülsen, in Kontakt kommen. Zur Fixierung der Vakuumkammer in dem Gesamtsystem sind Fixierbohrungen 21 vorgesehen. Für eine Verwendung der Vakuumkammer mit anderen Filterträgern oder anderen Filtersystemen weist der Unterteil 1 der Vakuumkammer zusätzlich in Ecken ausgefräste Zentrierschächte 22 und 23 auf.

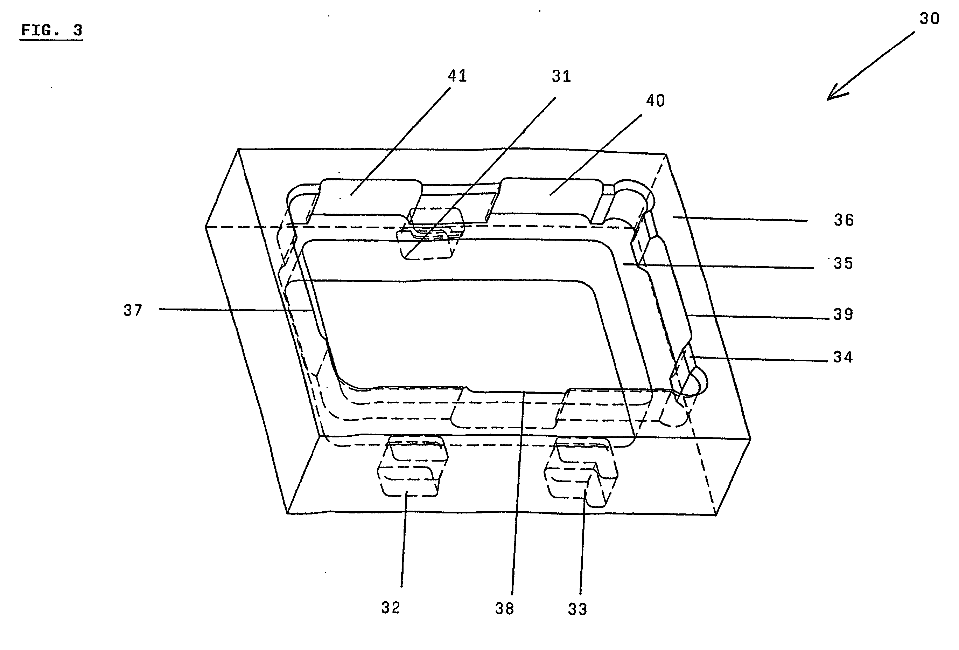

Fig. 3 zeigt eine Ansicht des Deckels 30 der Vakuumkammer, und zwar in einer Ansicht von unten. Zum Bewegen des Deckels 30 weist dieser ebenfalls Griffmulden 31, 32 und 33 für die Robotergreifer auf. Weiterhin umfaßt der Deckel eine 30 ° Phase an der Führungskante 34 zur Aufnahme des oberen Filterträgers (nicht dargestellt). Ferner ist im Inneren ein Sims 35 als Auflagefläche für den Filterträger angeordnet, auf der der Filterträger mittels eines entsprechenden Dichtungsmaterials abgedichtet wird. Weiter umfaßt der Deckel 30 eine Auflagefläche 36, die das Gegenstück zur Dichtstirnfläche des Unterteils 1 bildet. Im Deckel 30 sind entsprechende Aussparungen 37, 38, 39, 40 und 41 vorgesehen, in die die Führungslaschen des Unterteils beim Aufsetzen des Deckels 30 eingreifen und diesen endgültig justieren. Der Deckel 30 ist in der bevorzugten Ausführungsform nach oben (in der Fig. 3 nach unten) offen. Dies ist jedoch durch die spezielle Verwendung der Filterträger bedingt, die voraussetzen, daß auf der Oberseite des oberen Filterträgers normaler Atmosphärendruck herrscht, um die Flüssigkeit durch das Druckdifferential zwischen äußerem Luftdruck und oberen Vakuumbereich durch die Filterelemente zu transportieren. Bei anderen Anwendungen, wo beispielsweise keine Dämpfe in die Umgebung entweichen dürfen, kann der Deckel 30 auch geschlossen sein.

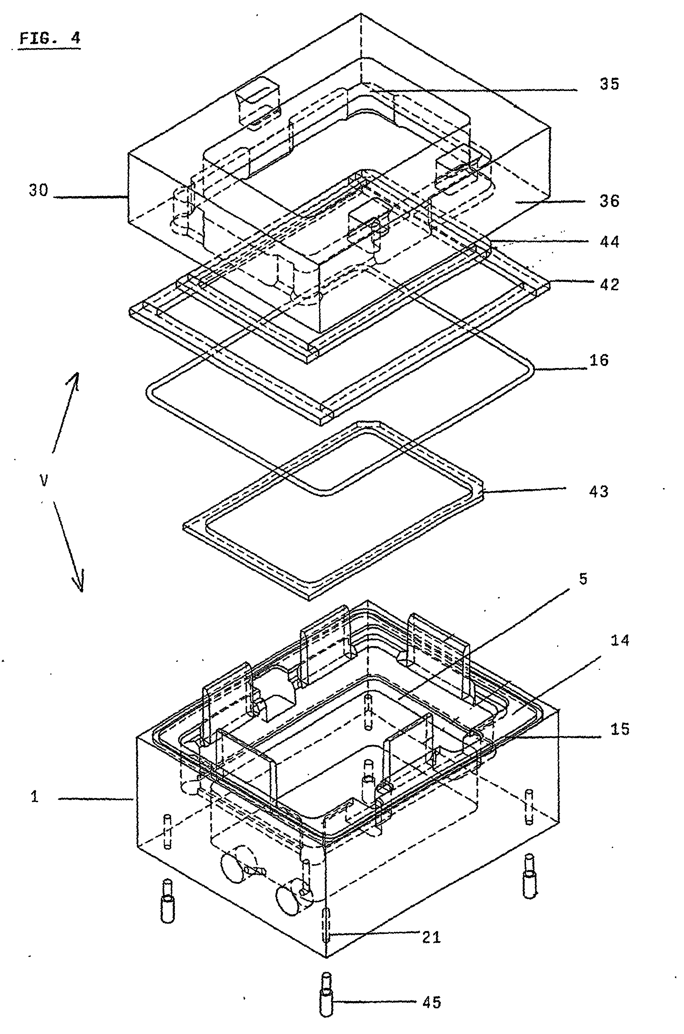

Fig. 4 zeigt eine Explosionsdarstellung der Vakuumkammer V bestehend aus dem Unterteil 1 und dem Deckel 30, wobei das Unterteil 1 und der Deckel 30 mittels einer Dichtung 16, die in der Nut 15 liegt, gegeneinander abdichten. Die Dichtung 16 drückt nicht direkt gegen die Dichtfläche 36 des Deckels 30, sondern dazwischen befindet sich noch ein umlaufendes Dichtungsband 42 mit einer Härte von 30 Shore. Eine Dichtung 43, die den unteren Filterträger (nicht eingezeichnet) gegen den Sims 5 des Unterteils 1 abdichtet, ist lose auf den Sims 5 gelegt. Die Dichtung 43 des unteren Filterträgers ist vorzugsweise eine Gummiauflage mit einer Härte von 60 Shore. Der obere Filterträger wird über ein Dichtungsband 44 gegen die Dichtfläche 35 des Deckels 30 abgedichtet. Die Härte der Dichtung 44 beträgt ca. 20 Shore.

Ferner sind Bolzen 45 dargestellt, mit denen die Vakuumkammer V über die Bohrungen 21 fixiert wird.

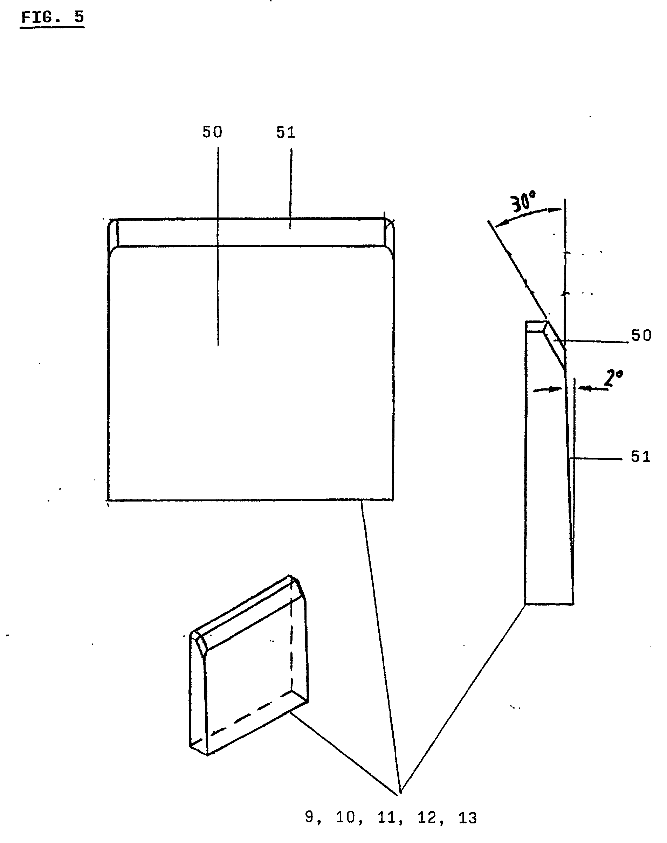

Fig. 5 zeigt eine zum Zentrieren verwendete Führungslasche 9 bis 13 in Draufsicht, Seitenansicht und perspektivischer Darstellung. Es ist zu erkennen, daß die Führungslasche 9 zwei voneinander unterschiedliche Phasen 50, 51 aufweist, wobei die erste Phase einen Winkel von ca. 30 ° und die zweite Phase einen Winkel von ca. 0 bis 5, vorzugsweise 2 °, aufweist. Die Größe einer Führungslasche beträgt 30 x 30 x 5 mm (Höhe x Breite x Dicke).

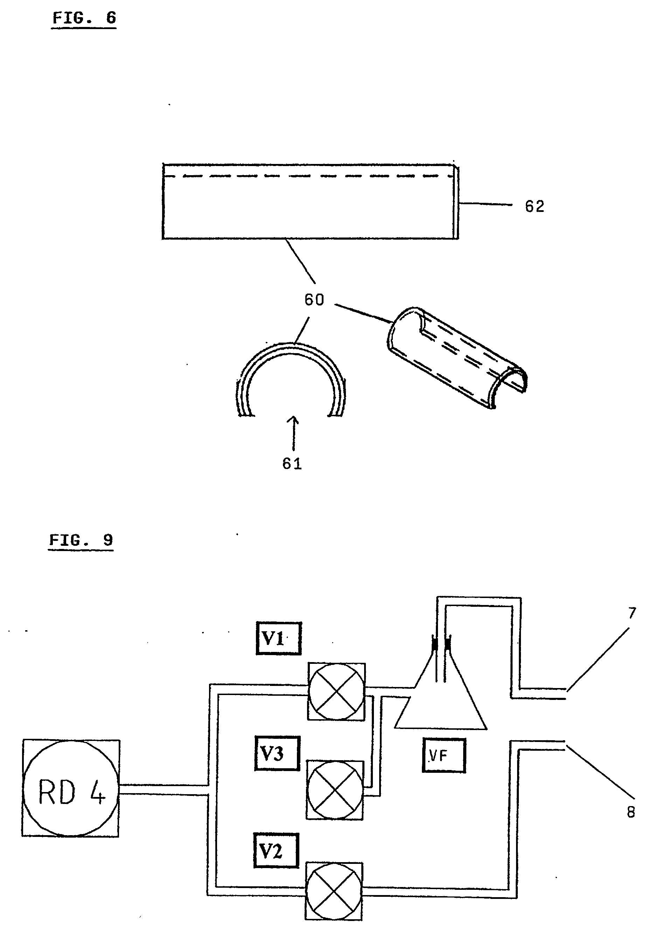

Fig. 6 zeigt die Abstandshülsen 60 für die Filterhalter , die auf die jeweiligen äußeren Eckschlote eines Filterträgers gesteckt werden. Diese Abstandshülsen 60 dienen einerseits zur endgültigen Justage des unteren Filterträgers und zum Definieren eines gewünschten Abstandes zwischen dem oberen und unteren Filterträger, um den oberen Vakuumbereich zwischen den Filterträgern zum Durchsaugen der Flüssigkeit aus dem oberen Filterträger in den unteren Filterträger zu schaffen. Würden die Filterträger in der Vakuumkammer auf einfache Weise übereinandergestellt, so wäre es unmöglich, zwei getrennte Vakuumbereiche in der Kammer einzustellen. Die Auslaßstutzen mit Auslaßspitzen der Filterschlöte des oberen Filterträgers passen dicht in die Filterschlöte des darunter befindlichen Trägers so daß ein sich im Zwischenbereich einstellendes Vakuum nicht in der Lage wäre, die sich in den Schlöten des oberen Filterhalters befindliche Präparationsflüssigkeit abzusaugen. Deshalb ist es notwendig, einen ausreichend großen Spalt, d.h. oberen Vakuumbereich, zwischen die beiden Filterträger anzuordnen. Weiterhin ist es aus präparationstechnischen Gründen unbedingt notwendig, ein zufälliges Verspritzen der abtropfenden Flüssigkeit in benachbarte Schlöte des unteren Filtersystems zu unterbinden. Eine Kreuzkontamination von benachbarten Proben wäre sonst die Folge, was das Ergebnis der Präparation unbrauchbar machen würde. Daher wird der Abstand der beiden Filterträger so bemessen, daß sich die Auslaßspitzen des oberen Filterträgers ca. 1,5 mm innerhalb der Filterelemente der Schlote des unteren Filterträgers befinden. Um diesen Abstand und die Definition des ersten Vakuumbereichs zu gewährleisten, werden daher zylinderförmige Abstandshülsen 60 eines definierten Radius auf die Eckschlöte gesteckt, wobei die Abstandshülsen 60 aufgefräst sind, d.h. mit einem breiten Längsspalt 61 versehen sind, so daß auch die Eckschlöte ausreichend mit Vakuum beaufschlagt werden. Zur Justierung des unteren Filterträgers sind die Stirnseiten 62 der Abstandshülsen 60 angephast. In einer bevorzugten Ausführungsform ist die Abstandshülse 60 31,5 mm lang und weist einen Außendurchmesser von 11,4 mm auf, wobei die Höhe des teilweise offenen Zylinders 7,8 mm beträgt. Der Innendurchmesser ist auf 9,2 mm festgelegt und die stirnseitige Phase beträgt 0,5 mm x 45 °. Dieser 45 ° Phaseneinschnitt stellt den ersten mechanischen Kontakt zu den entsprechenden Führungen des Unterteils her. Über die Geometrie der Abstandshülsen bewirkt die weitere Abwärtsbewegung des Greifarms die notwendigen Korrekturen zur exakten Aufnahme der Filterträger. Zwecks einfacher Handhabung im Laborbetrieb sind die Abstandshülsen 60 aus einem Material gefertigt, das einerseits die flexiblen Eigenschaften von Clipfedern hat, andererseits jedoch ausreichende Chemikalienresistenz und Steifigkeit aufweist, so daß die Abstandshülsen 60 federnd auf die vier Eckschlote der Filterträger gesteckt werden können. Daher wurden 1,5 mm dicke Hülsen 60 aus Plexiglas gewählt. Für eine industrielle Herstellung können diese auf ökonomische Weise aus Plexiglasrohren hergestellt werden. Der zum Aufstecken auf die vier Eckschlote notwendige Spalt 61 ist ausreichend groß, um das Einstellen des Vakuums dort nicht zu behindern. Diese Abstandshülsen können auch an die Filterträger fest angeordnet werden, beispielsweise in einem Spritzgußverfahren o.a.

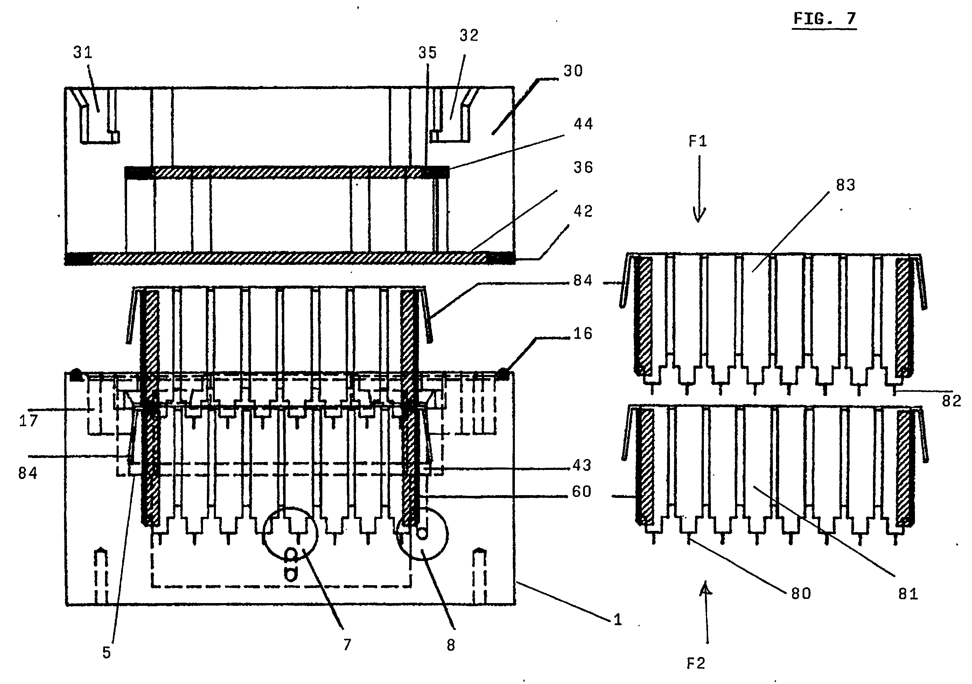

Fig. 7 zeigt die in dem Unterteil 1 der Vakuumkammer übereinander angeordneten unteren und oberen Filterträger F1, F2, wobei die Auslaßspitzen 80 der einzelnen Filterelemente 81, die hier als Schlote ausgebildet sind, des unteren Filterträgers F2 in den unteren Vakuumbereich der Vakuumkammer hineinragen. Die Auslaßspitzen 82 der Filterelemente 83 des oberen Filterträgers F1 ragen in den oberen Schlotbereich der Filterelemente 81 des unteren Filterträgers F2. Durch die entsprechende Wahl der Abstandshülsen 60, die auf dem unteren Filterträger F2 aufstehen, wird der obere Vakuumbereich definiert. Dargestellt ist ferner der Deckel 30 vor dem Aufsetzen auf das Unterteil 1, wobei das Unterteil 1 in seiner Dichtfläche eine Nut mit einem Dichtgummi 16 aufweist, die gegen die Dichtung 42 der Dichtfläche 36 des Deckels 30 dichtet. Der obere Filterträger F1 dichtet gegen die Dichtung 44 des Deckels 30. Seitlich in der Fig. 7 dargestellt sind nochmals die beiden Filterträger F1 und F2 zu sehen. Die aus den Filterelementen 81, 83 bestehenden Filterträger F1 und F2 können einstückig ausgebildet sein. Es ist jedoch auch möglich, daß beispielsweise mittels des Zusammensteckens einzelner Filterelement 81 bzw. 83 über entsprechende Verbindungen ein Filterträger F1, F2 sozusagen modular aufgebaut werden kann. Ferner weisen die Filterträger F1, F2 Seitenwände 84 auf. Dabei steht der untere Filterträger F2 auf der Dichtung 43 des Sims 5 des Unterteils 1 der Vakuumkammer auf und bildet so den unteren Vakuumbereich der über den Absaugschacht 7 entlüftet bzw. entleert wird. Durch den Absaugschacht 8 wird das obere Vakuum gebildet. Ferner sind die beispielhaft Griffmulden 31, 32 und 17 für die Robotergreifer dargestellt. Die Griffmulden 31, 32, 17 sind nach oben mittels einer Phase geöffnet, um einen besseren Zugang für den Roboter zu erreichen. In ihrem Bodenbereich weisen sie eine Nut auf, so daß sich der Robotergreifer in den Mulden 31, 32, 17 verspannen kann.

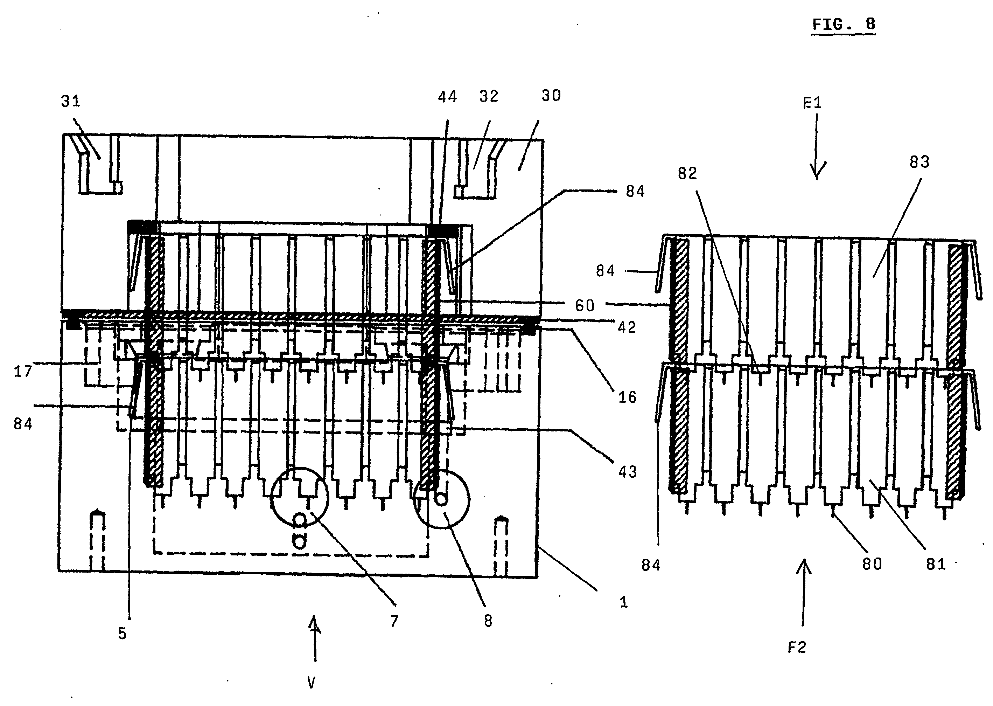

Fig. 8 zeigt dieselbe Situation wie Fig. 7, jedoch nunmehr mit aufgesetztem Deckel, wobei zu erkennen ist, daß der obere Filterträger F1 mit der Dichtfläche 35 und einer entsprechenden Dichtung 44 gegen den Deckel 30 abdichtet. Rechts dargestellt sind die übereinandergestellten Filterträger F1, F2, wobei über die Größe der Abstandshülse 60 der obere Vakuumbereich definiert wird.

Das Einsetzen der in der Fig. 1 schematisch dargestellten Filterträger F1, F2 in die Vakuumkammer V und ihre Komponenten entsprechend den Figuren 2 bis 6, wird nachfolgend unter Bezug auf die Figuren 7 und 8 erklärt werden.

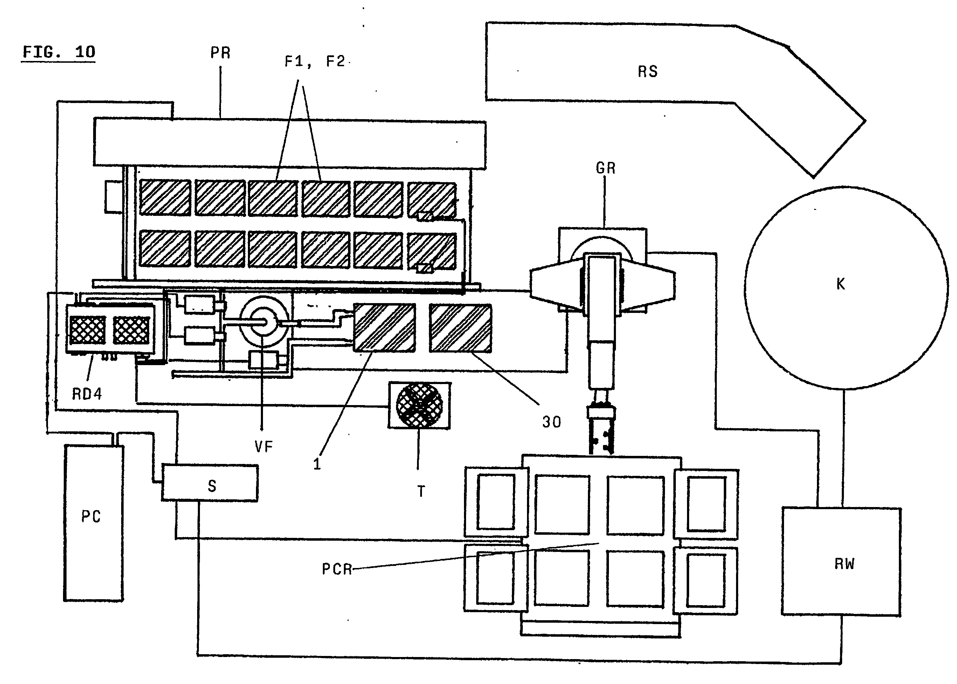

Werden die Filterträger F1, F2 aus einem Pipettierroboter PR (Fig. 10) in die Vakuumkammer V mittels eines Greifroboters GR (Fig. 10) eingebracht, so können sich auf dem Verfahrweg geringfügige Lageänderungen ergeben. Würden diese Veränderungen nicht behoben, so käme es in einem sensorisch nicht rückgekoppelten Robotersystem, wie es in diesem Fall vorliegt, rasch zur mechanischen Katastrophe. Aus diesem Grunde wird durch die Vakuumkammer V selbst beim Einführen der Filterträger F1, F2 eine mechanische Zwangsjustierung vorgenommen.

Wird das die Flüssigkeit auffangende Filter F2 (unteres Filter) in die Vakuumkammer V eingestellt, so sind es die Führungslaschen, die den ersten mechanischen Kontakt zum Unterteil 1 der Vakuumkammer V herstellen. Weil der Filterträger F2 während des Verfahrweges von der Pipettierstation zur Vakuumkammer V geringfügige Lageänderungen erfahren kann, dienen diese Führungslaschen dazu, den Filterträger F2 während des Einführens in das Unterteil 1 der Kammer V in die erforderliche Lage zurückzubringen. Der in dieser bevorzugten Ausführungsform verwendete CRS 465 (Greifroboter) kann vorgegebene Koordinaten nur über eine im C500-Controller berechnete "Spline-Funktion" einfahren. Deswegen ist es notwendig, stets hinsichtlich der Spline-Funktion entspannte Bewegungsabläufe vorzugeben. Somit nähert sich der Robotergreifarm mit dem Filterträger F2 zunächst mit mittelhoher Geschwindigkeit einer Annäherungsposition ca. 1 cm senkrecht über dem endgültigen Kontaktpunkt mit den Führungslaschen. Beim langsamen Absenken des Filterträgers F2 wird der Kontakt an den Phasen der Führungslaschen erfolgen, wobei Fehlstellungen zunächst an den 30 Grad-Phasen, später an den 2 Grad-Neigungen der senkrecht zur Bewegungsrichtung ausgerichteten Flächen über die erzwungene Abwärtsbewegung des Greifarms ausgeglichen werden. Nach ca. 1 cm ist der Filterträger F2 von den fünf, im 2 Grad-Winkel sich nach unten verjüngenden Justierflächen derart flankiert, daß Fehlstellungen im horizontalen Bereich relativ zum Unterteil 1 der Vakuumkammer in jedem Fall ausgeglichen sind. Nun erst erfolgt die vertikale Justierung des Filterträgers F2 an den Zentrierschächten der Kammer. An den äußeren vier Eckschloten des Filterträgers sind Abstandshülsen 60 angebracht, die neben ihrer Funktion den oberen Filterträger F1 für das Vakuum im oberen Bereich der Kammer V zugänglich zu machen, hier ihre zweite Funktion wahrnehmen, nämlich die vertikale Korrektur von Fehlstellungen des unteren Filterträgers F2. Hierzu befinden sich ebenfalls 30 Grad-Phasen sowohl an den Abstandshülsen 60 als auch an den Zentrierschächten des Vakuumkammerunterteils 1. Nach ca. 2 mm Verfahrstrecke ist der Filterträger F2 durch die Abwärtsbewegung des Roboterarms in korrekter Lage innerhalb des Unterteils 1 der Vakuumkammer V positioniert. Das Greifwerkzeug fährt dabei in die Griffmulden 17 des Unterteils 1 ein. Etwa 1 mm oberhalb des endgültigen Aufsetzpunktes wird der Filterträger F2 vom Greifer des Roboterarms gelöst und setzt somit auf die auf den Sims 5 des Unterteils 1 aufgelegte Abdichtung 43 auf.

Wird der obere Filterträger F1 über den Robotergreifarm eingestellt, so wird dessen Zentrierung in ähnlicher Weise über die Führungslaschen bewerkstelligt. Die Abstandshülsen 60 richten den oberen Filterträger F1 parallel zum bereits in dem Unterteil 1 befindlichen unteren Träger F2 aus. Falls es dennoch zu einer Fehlstellung des oberen Filterhalters F1 kommen sollte, wird diese durch die besondere Konstruktion des Deckels 30 ausgeglichen. Wird der Deckel 30 der Vakuumkammer V aus einer speziellen Parkposition vom Greifer des Greifroboters auf das Vakuumkammerunterteil 1 aufgesetzt, so erfolgt der erste Kontakt des Deckels 30 an den Führungslaschen des Unterteils 1. Diese haben für diesen Zweck neben ihren 30 ° Innenphasen noch kurze 45 ° Außenphasen erhalten. Der Deckel 30 nimmt diese in speziellen Aussparungen auf. Über die Abwärtsbewegung des Greifers wird der Deckel 30 an den Aussparungen ausgerichtet. Nach ca. 0,5 cm ist der Deckel 30 mechanisch so weit an dem Unterteil 1 der Vakuumkammer V ausgerichtet, daß die zweite Funktion des Oberteils 30 ausgerichtet werden kann, nämlich die Korrektur eines eventuell fehlplazierten oberen Filterhalters F1. Zu diesem Zweck ist der Deckel 30 an den entsprechenden Berührungszonen mit 30 ° Phasen versehen worden. Die Breite der Phase ergibt sich aus der möglichen Fehlplazierung des Filterhalters F1. Weil die Toleranzen über die Führungslaschen maximal 0,5 mm betragen können, ist die Phase am Deckel auf jeder Seite ca. 0,5 mm breit. Dies gewährleistet ausreichende Toleranz in der Aufnahme des Filterträgers F1. Durch die Abwärtsbewegung des Greifers wird der Filterhalter F1 über die Phasen des Deckels 30 in die geeignete Position gezwungen, falls dies notwendig sein sollte.

Die Verdichtung der zusammengesetzten Kammer V erfolgt insgesamt an drei Stellen. Die unterste Zone verdichtet um eine 60 Shore harte Gummiauflage. Die zweite Zone ist die Nahtstelle zwischen dem Unterteil 1 und dem Deckel 30 der Vakuumkammer V. Sie wird aus der Kombination O-Ring 16 (60 Shore) und elastischem (30 Shore) Dichtungsband 42 gebildet. Die dritte Zone dichtet das obere Filter F1 gegen den inneren Deckelbereich ab. Der Deckel 30 verfügt also über zwei Auflageflächen 35 ,36, die für die Anbringung des Dichtungsmaterials vorgesehen sind. Sie werden zu diesem Zweck fertigungstechnisch angerauht.

Fig. 9 zeigt das zum Betrieb der Vakuumkammer notwendige Ventilsystem. Ausgehend von einer Öldruckpumpe RD4 wird ein Vakuumschlauch bei einer Y-Verbindung mit zwei elektronischen Ventilen V1, V2 verbunden, die zur kontrollierten Einstellung von zwei Vakuumbereichen in der Kammer dienen , nämlich dem oberen Vakuumbereich zwischen den zwei Filterträgern , und dem unteren Vakuumbereich zum Absaugen der Flüssigkeit aus dem unteren Filterträger. Das Ventil V2, das für den oberen Vakuumbereich zuständig ist, wird über einen Vakuumschlauch direkt mit dem entsprechenden Anschluß 8 der Kammer verbunden. Das andere Ventil V1, das die Evakuierung des Bodenbereichs kontrolliert, ist über einen Vakuumschlauch mit dem Entlüftungsrohr einer Vakuumfalle VF verbunden. Die seitliche Olive der Falle VF ist mit einer Schlauchverbindung an den Anschluß des unteren Bereichs der Vakuumkammer angeschlossen. Somit kann über diese Anordnung das Abfallvolumen von ca. 500 ml aus dem System entnommen werden. Zwischen der Vakuumfalle VF und dem regelnden Ventil V1 ist durch ein T-Stück ein Entlüftungsventil V3 angeschlossen, das eine wichtige Rolle bei der Aufrechterhaltung des normalen Luftdrucks im unteren Kammerbereich spielt. Dieses Ventil V3 stellt eine Verbindung zum normalen Luftdruck her.

Die drei Proportionalventile V1, V2, V3 verfügen über eine jeweils eigene Ansteuerungselektronik, die von der Steuersoftware über ein Decodiergerät von einem PC angesteuert werden kann. Das Decodiergerät übernimmt ebenfalls die Ansteuerung der Öldruckpumpe RD4, wodurch die Steuersoftware auch dessen Aktivität kontrollieren kann. Die Ventile V1, V2, V3 können einfache Gasventile ohne besondere Beschichtungen sein. Ihr Öffnungs- und Schließverhalten kann über die Ansteuerungselektronik verändert werden. So öffnen sich die beiden Vakuumventile V1, V2 nach Erhalt ihres Ansteuerungssignals linear über einen Zeitraum von 2 Sekunden zur voreingestellten Weite. Diese verzögerte Öffnung verhindert ein zu raschen Evakuieren der Vakuumkammer durch die angeschlossene Öldruckpumpe RD4. Die Steuersoftware startet zunächst die Öldruckpumpe RD4, welche daraufhin im gesamten Zuleitungsbereich zu den Ventilen V1, V2 einen Unterdruck erzeugt. Nach ca. 5 Sekunden wird von der Steuersoftware, je nach Erfordernis des aktuellen Präparationsschrittes, der Impuls zur Öffnung eines der beiden Ventile V1, V2 gesendet. Würde sich dieses zu rasch öffnen, so könnte der entstehende Impuls das Filtersystem oder die Vakuumkammer beschädigen. Das Entlüftungsventil V3, das parallel zum unteren Vakuumbereich der Kammer angeschlossen ist, öffnet sich linear über eine Zeitspanne von 0,1 Sekunden auf seine volle Weite. Es wird von der Steuersoftware dann in vorgegebenen Zeitintervallen aktiviert, wenn der obere Bereich der Vakuumkammer evakuiert werden soll, der untere hingegen normalen Luftdruck aufweisen muß. Dies ist der Präparationsschritt, bei dem Flüssigkeit aus den Schloten des oberen Filterträgers in den unteren gesaugt wird. Hier muß ein sich einschleichender Unterdruck möglichst rasch und effektiv aus dem System genommen werden. Weil damit zu rechnen ist, daß der Druckunterschied in diesem Fall klein ist, wird das Ventil V3 rasch auf seine volle Weite geöffnet bzw. geschlossen. Ein sich eventuell aufbauender Unterdruck im Bodenbereich der Kammer wird durch die häufige Entlüftung auf diese Weise vernachlässigbar klein gehalten.

Während der Plasmidpräparation fällt ein Abfallvolumen von ca. 500 ml an, das aus dem unteren Bereich der Kammer abgeführt werden muß. Der Abfall besteht aus den zur Präparation notwendigen Chemikalien und den Zellresten der Bakterien. Die Flüssigkeit ist also sowohl von ihrer chemischen als auch von ihrer biologischen Beschaffenheit nicht unbedenklich, so daß diese in einem entsprechend gesicherten Behältnis zwischengelagert werden muß, um nach Abschluß der Präparationsarbeiten kontrolliert entsorgt werden zu können. Daher wurde die Vakuumkammer im unteren Kammerbereich mit einer Ansaugstelle 7 versehen, die über ein Ableitungssystem an die Vakuumfalle VF angeschlossen ist. Das während der Präparation im unteren Bereich anliegende Vakuum sorgt dafür, daß anfallende Flüssigkeit des unteren Filterträgers sofort in die Vakuumfalle VF abgesaugt wird, die gleichzeitig als Zwischenlager fungiert. Das für das untere Vakuum verantwortliche Steuerungsventil V1 ist aus Kostengründen mit einem Messingverschluß ohne besondere Schutzauflagen ausgestattet. Wegen der Aggressivität der Präparationsflüssigkeiten wird dieses Steuerungsventil V1 vor die Vakuumfalle VF gesetzt. Somit ist es auch möglich, eine Vakuumfalle VF aus kostengünstigem Material (Preßglas) zu wählen. Zur Erzeugung des Vakuums wurde eine Öldruckpumpe (Modell RD4, Fa. Vakubrand) mit einem Saugvermögen von 4,3 m³/h eingesetzt. Wird diese Öldruckpumpe aktiviert, dann baut sich das Vakuum vor dem Ventil V1 und nicht in der Vakuumfalle VF auf, die sich bis zur Öffnung des über die elektronische Ansteuerung geregelten Ventils V1 unter normalem Luftdruck befindet. Diese Ansteuerung ist dabei so ausgelegt, daß sich das Ventil V1 über den Zeitraum von 1 Sekunde proportional öffnet, wodurch sich das Vakuum nicht so schnell in der Falle VF aufbaut. Die Vakuumbelastung für diese Falle VF besteht also nur während der Zeit, in der die Präparationsflüssigkeiten durch die Filtermaterialien bewegt werden. Weil in dieser Zeit der schwächste Punkt des Systems die 0,7 mm dicke Plastikschale des Filterträgers ist, der direkt an den normalen Luftdruck angeschlossen ist, besteht während des gesamten Präparationsvorganges keine Gefahr der Implosion für die Vakuumfalle. Selbst wenn eine Verstopfung des Filtermaterials in allen Schloten des Filterträgers , stattfinden sollte, ist die Vakuumkammer so konstruiert, daß der untere Dichtungsgummi als Sicherheitsventil fungiert. Der Dichtungsgummi wird aus seiner seitlichen Phase in die Kammer gezogen und das Vakuum reißt über die auf diese Weise entstandene Öffnung zum normalen Luftdruck hin ab. Somit ist auch eine Zerstörung des Filterträgers ausgeschlossen. Um die abzusaugende Flüssigkeit möglichst rasch aus dem unteren Kammerbereich zu entfernen, wurde die Absaugöffnung 7 direkt am Boden der Kammer angebracht. Diese ist über eine Bohrung direkt mit dem Absauganschluß 7 verbunden.

Um geringfügige Materialtoleranzen der Filter ausgleichen zu können und ein sicheres Schließen der Vakuumkammer zu erreichen, weisen die Materialien der drei Dichtungen die folgenden Eigenschaften auf:
Das Dichtungsmaterial des unteren Kammerteils muß ein Material mittlerer Steifigkeit sein, im vorliegenden Falle beträgt die Härte 60 Shore. Dies gewährleistet, daß bei der zyklischen Vernichtung des sich einschleichenden Vakuums aus den oberen Kammerbereichen die Verdichtung des oberen Filterträgers gegen den Deckel nicht gelöst wird.
Das Dichtungsmaterial des Deckels muß sehr weich und elastisch sein (20 Shore). Dies gewährleistet eine ausreichende Verdichtung des Deckels gegen den oberen Filterträger sowie gegen der O-Ring der unteren Kammerhälfte Durch seine sehr elastische Eigenschaft ist auch ein Ausgleich von Fertigungstoleranzen des Filterträgers möglich. Die Fertigungstoleranzen der Filterträger wirken zweifach: zum einen ist die Auflagehöhe des unteren Filterträgers betroffen, zum anderen auch die Abdichtung des oberen Filterträgers gegen den Deckel .

Der O-Ring des Unterteil dichtet die Kammer gegen das sehr weiche Dichtungsmaterial des Deckels ab. Der O-Ring hat dabei einen Durchmesser von 2 mm. Durch seine kleine Auflagefläche ist somit ein wesentlich geringerer Anpreßdruck des Deckels gegen den unteren Teil der Vakuumkammer notwendig, um eine ausreichende Verdichtung zu erreichen. So reicht das Gewicht des Deckels zusammen mit dem sich im Inneren der Kammer aufbauenden Vakuum aus, um den Deckel mit den von ihm eingeschlossenen Filterträger dicht zu schließen. Dieser Punkt ist für eine unbeaufsichtigte Präparation durch ein Robotersystem sehr wichtig, weil ein sich nicht ordnungsgemäß aufbauendes Vakuum eine Zerstörung der gesamten Plasmidpräparation bedingt.

Ferner muß auf ein gezieltes Absaugen der Flüssigkeit aus den oberen Filterelementen in den darunter angebrachten Filterträgern bzw. Auffangbehälter gelegt werden. Die Flüssigkeit muß in diesem unteren Filterträger liegenbleiben, ohne sogleich weiter in den Bodenbereich der Kammer durchgesaugt zu werden. Wenn sich das Vakuum im oberen Bereich der Kammer bildet, dann wird zu dem Zeitpunkt, zu dem noch keine Flüssigkeit in dem unteren Filterträger getropft ist, eine geringe Menge Gas durch die unbenetzten Filterträger nach oben steigen. Somit bildet sich ein geringfügiges Vakuum im unteren Bereich der Kammer. Nachdem nun alle Flüssigkeit aus dem oberen Filterträger in den unteren gewechselt ist, wird sich im Deckelbereich der Vakuumkammer normaler Atmosphärendruck einstellen. Dadurch wird der sich zu Beginn im Bodenbereich der Kammer gebildete Unterdruck einen Teil der sich nun in dem unteren Filterträger befindlichen Flüssigkeit auf den Boden der Kammer durchsaugen. Um diesen Effekt zu vermeiden, wird das Entlüftungsventil durch die Softwareansteuerung in Intervallen geöffnet. Zu Beginn des Entlüftungsprozesses erfolgt nach jeder Sekunde, nach ca. 10 Sekunden jeweils pro verstrichenen 5 Sekunden, eine Vollöffnung des Entlüftungsventils V3. Die öffnungsgeschwindigkeit des Ventils V3 ist dabei maximal. Diese zyklische Entlüftung des unteren Vakuumbereichs wird, während der obere Vakuumbereich an das Vakuum angeschlossen ist, aus Sicherheitsgründen ständig beibehalten. Bei unüberwachten Roboterpräparationen könnte eine Undichtigkeit im unteren Bereich der Kammer zu einem ständigen Aufbau eines Unterdrucks führen. Durch die zyklische Ventilation des unteren Bereichs der Kammer kann dies ausgeglichen werden.

Fig. 10 zeigt eine Schemadarstellung des Gesamtsystems zur automatischen Plasmidpräparation. Das System umfaßt einen Pipettierroboter PR (BIOMEK 2000), das Vakuumsystem mit der Pumpe RD4, den Ventilen der Vakuumfalle VF und der Vakuumkammer einem Greifroboter GR (CRS 465), eine PCR- Maschine PCR (PTC 225, MJ-Research), ein festes Regalsystem RS für kritische Laborware (Kochsalzpuffer, Säuren etc.) und ein Karussell K (d.h. ein drehbares Regalsystem für Labware). Ferner umfaßt das System noch einen Trockner T für die Filterträger F1, F2. Zur Steuerung des Greifroboters GR ist dieser an eine Risc-Workstation RW (C500) angeschlossen, die über eine serielle Schnittstelle S (vorzugsweise eine RS 232 Schnittstelle) von einem PC-Steuerungsrechner PC angesprochen wird, der den gesamten automatischen Plasmidpräparationsablauf überwacht. Die Anordnung des Greifroboters GR ist derart, daß er Zugang zu den auf dem Pipettierroboter PR angeordneten Filterträgern F1, F2, der Vakuumkammer bestehend aus Unterteil 1 und Deckel 30, den beiden Regalsystemen RS, K, dem Trockner T und der PCR-Maschine PCR hat. Dabei hat der Deckel 30 der Vakuumkammer einen eigenen Ablageplatz. Der Präparationsablauf des Greifroboters GR, der mit einer dreifingrigen Hand ausgerüstet ist, ist entsprechend dem Qiagenprotokoll wie folgt: der Greifroboter GR entnimmt dem Karussell K einen Filterträger F2 für das untere Filter und setzt dieses in das Unterteil 1 der Vakuumkammer ein. Anschließend entnimmt er dem Pipettierroboter PR den oberen Filterträger F1, dessen Schlote (Filterelemente ) von dem Pipettierroboter PR mit der entsprechenden Präparationsflüssigkeit pipettiert wurden, und setzt diesen auf das untere Filter F2 in das Unterteil 1 der Vakuumkammer Anschließend wird der Vakuumkammerdeckel 30 aufgesetzt und die Filtrierung, d.h. der Transport der Flüssigkeit durch die Filterträger F1, F2, wird durch Anlegen eines entsprechenden Vakuums an den oberen bzw. unteren Vakuumbereich durchgeführt. Nach Beendigung der Filtrierung wird die Vakuumkammer durch den Greifroboter GR automatisch geöffnet und der oberste Filter F1 entfernt und entsorgt. Der untere Filterträger F2 wird wieder in den Pipettierroboter PR verbracht und mit der entsprechenden Präparationsflüssigkeit gefüllt, während der Greifroboter GR aus dem Karussell K einen weiteren, als unteren Filterträger zu verwendenten Filterträger F2 für den nächsten Filtrationsschritt entnimmt und diesen als unteren Filterträger F2 in das Unterteil 1 der Vakuumkammer einbringt. Anschließend wird aus dem Pipettierroboter PR der pipettierte Filterträger entnommen und als oberer Filter F1 in das Unterteil 1 eingesetzt und die Vakuumkammer verschlossen. Nach erfolgten Flüssigkeitstransport wird die Kammer wieder geöffnet, der obere Filterträger F1 entsorgt und der untere Filterträger F2 wieder in den Pipettierroboter PR zum Einbringen der nächsten Präparationsflüssigkeit verbracht. Handelt es sich bei dem nächsten Filtrationsschritt um den letzten, so entnimmt der Greifroboter GR dem Karussell nunmehr einen Auffangträger und setzt ihn als unteren Träger F2 in das Unterteil 1 ein. Anschließend wird der entsprechende pipettierte Filterträger dem Pipettierroboter PR entnommen und als oberer Filterträger F1 in das Unterteil 1 eingebracht und die Vakuumkammer wird verschlossen. In dem nunmehrigen dritten Filterschritt wird die reine DNA enthaltende Präparationsflüssigkeit in den Auffangträger F2 gesaugt, und die Filtrierung nach dem Qiagen-Protokoll ist fertig.

Zur Steuerung des Gesamtsystems bedarf es für jede der Einheiten eine spezielle Ansteuerung und Regelung. Mit anderen Worten, für jedes der Module des Gesamtsystems ist eine eigene Ansteuerungssoftware vorgesehen. Alle Ansteuerungsvorgänge sind innerhalb dieser Steuerungssoftware geregelt und bedürfen keiner Rückkopplung zum aufrufenden System. Als Betriebssystem wird vorzugsweise Windows-NT gewählt, da es über ein stabiles präemptives Multitasking verfügt, das auch phasenparallele Unterprogramme unterstützt, und es möglich ist Verfahren der Interprozeßkommunikation einzusetzen.

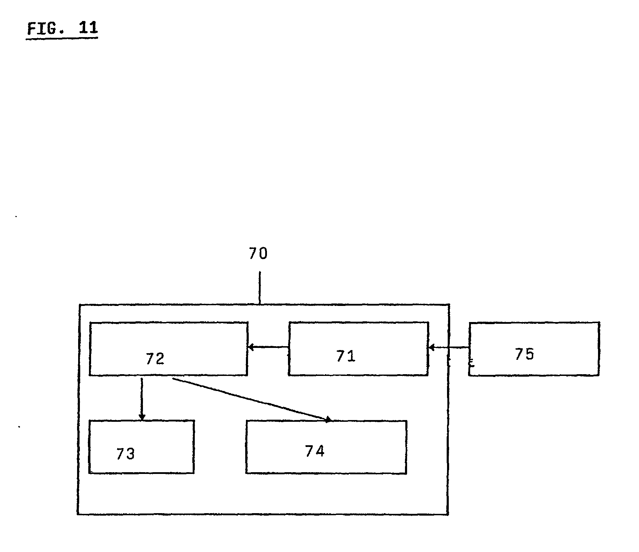

Fig. 11 schließlich zeigt das Blockschaltbild der Steuerung des Moduls 70 der Vakuumkammer. Das Modul 70 umfaßt die Untermodule "Ansteuerung Vakuumkammer" 71, "Elektronik" 72, "Ventile" 73 und "Ölpumpe RD4" 74, wobei das Modul 70 von dem Modul "Aufrufender Roboter" 75 angesteuert wird, d.h. die Ansteuerung der Vakuumkammer startet. In dem Modul 70 werden drei Ventile und eine Öldrucksaugpumpe von einem Computer PC angesteuert. Die verwendeten Ventile sind im interaktiven Zustand geschlossen, da deren Schließer im Inneren des Ventils durch eine Feder gegen die Ventilabdichtung gedrückt wird.

### Bezugszeichenliste

- 1 -: Unterteil
- 2 -: Innenraum Unterteil
- 3 -: Kammerbodenteil
- 4 -: Oberteil
- 5 -: Sims
- 6 -: Nut
- 7 -: Absaugschacht
- 8 -: Absaugschacht
- 9 -: Führungslasche
- 10 -: Führungslasche
- 11 -: Führungslasche
- 12 -: Führungslasche
- 13 -: Führungslasche
- 14 -: obere Stirnfläche
- 15 -: Nut
- 16 -: Dichtgummi
- 17 -: Griffmulde
- 18 -: Griffmulde
- 19 -: Griffmulde
- 20 -: angephaste Führungskante Unterteil
- 21 -: Bohrung
- 22 -: Zentrierschacht
- 23 -: Zentrierschacht
- 30 -: Deckel
- 31 -: Griffmulde
- 32 -: Griffmulde
- 33 -: Griffmulde
- 34 -: angephaste Führungskante Deckel
- 35 -: Sims Deckel (Dichtfläche oberer Filterträger)
- 36 -: Dichtfläche Deckel/Unterteil
- 37 -: Aussparung
- 38 -: Aussparung
- 39 -: Aussparung
- 40 -: Aussparung
- 41 -: Aussparung
- 42 -: Dichtung Deckel/Unterteil
- 43 -: Dichtung unterer Träger
- 44 -: Dichtung oberer Träger
- 45 -: Bolzen
- 50 -: Phase Führungslasche
- 51 -: Phase Führungslasche
- 60 -: Abstandshülse
- 61 -: Spalt
- 62 -: angephaste Stirnkante
- 70 -: Modul " Vakuumkammer"
- 71 -: Modul "Ansteuerung Vakuumkammer"
- 72 -: Modul "Elektronik"
- 73 -: Modul "Ventile"
- 74 -: Modul "RD4 Ölpumpe"
- 75 -: Modul "Aufrufender Roboter"
- 80 -: Auslaßspitze
- 81 -: Filterelement
- 82 -: Auslaßspitze
- 83 -: Filterelement
- 84 -: Seitenwand Filterträger
- V -: Vakuumkammer
- F1 -: oberer Filterträger
- F2 -: unterer Filterträger
- V1 -: Ventil
- V2 -: Ventil
- V3 -: Ventil
- VF -: Vakuumfalle
- RD4 -: Ölpumpe
- PR -: Pipettierroboter
- RS -: Regalsystem
- K -: Karussel
- GR -: Greifroboter
- RW -: Risc-Workstation
- T -: Trocknereinheit
- S -: Schnittstelle
- PC -: Steuerungsrechner
- PCR -: PCR - Maschine

## Patentansprüche

1. Vakuumsystem zum gerichteten Transport einer Substanz, mit einer Vakuumkammer (V), die ein erstes permeables Mittel(F1) und ein zweites permeables Mittel (F2), die übereinander angeordnet sind, und zwei Vakuumbereiche aufweist, wobei der obere Vakuumbereich durch den Raum zwischen dem ersten permeablen Mittel (F1) und dem zweiten permeablen Mittel (F2) und der untere Vakuumbereich durch den Raum zwischen dem zweiten permeablen Mittel(F2) und einem Boden der Vakuumkammer definiert wird,
einer Vakuumpumpe (RD4),
einem ersten elektronisch geregelten Ventil (V1) für den unteren Vakuumbereich
einem zweiten elektronisch geregelten Ventil (V2) für den oberen Vakuumbereich und
einer am unteren Vakuumbereich angeordneten Vakuumfalle (VF) zur Aufnahme eines Abfallvolumens,
**gekennzeichnet durch**
ein vor das erste elektronische Ventil (V1) geschaltetes drittes Ventil (V3) zum Zerstören eines Schleichvakuums im unteren Vakuumbereich ,
wobei in dem oberen und dem unteren Vakuumbereich unabhängig voneinander jeweils ein Vakuum erzeugt und eingestellt werden kann, so daß die Substanz in zwei Schritten **durch** das erste permeable Mittel (F1) und das zweite permeables Mittel (F2) in den unteren Vakuumbereich transportiert wird.

2. Vakuumsystem nach Anspruch 1, **dadurch gekennzeichnet, daß** die zu transportierende Substanz ein Fluid, insbesondere eine Flüssigkeit, ist.

3. Vakuumsystem nach Anspruch 1 oder 2, **dadurch gekennzeichnet, daß** das Vakuumsystem (V) genau zwei Vakuumbereiche aufweist.

4. Vakuumsystem nach Anspruch 3, **dadurch gekennzeichnet, daß** das erste permeable Mittel (F1) durch einen Filterträger gebildet wird.

5. Vakuumsystem nach einem der Ansprüche 1 bis 4, **dadurch gekennzeichnet, daß** das zweite permeable Mittel (F2) durch einen Filterträger gebildet wird.

6. Vakuumsystem nach einem der Ansprüche 1 bis 5, **dadurch gekennzeichnet, daß** das Vakuumsystem (V) einen Deckel(30) und ein Unterteil (1) aufweist.

7. Vakuumsystem nach Anspruch 6, **dadurch gekennzeichnet, daß** das Unterteil (1) der Vakuumkammer (V) einen Sims (5) zum Tragen des zweiten permeablen Mittels (F2) aufweist.

8. Vakuumsystem nach Anspruch 6 oder 7, **dadurch gekennzeichnet, daß** in den Seitenwänden des Unterteils (1) der Vakuumkammer (V) Aussparungen (17, 18, 19) für einen Greifer eines Roboters (GR)vorgesehen sind.

9. Vakuumsystem nach einem der Ansprüche 6 bis 8, **dadurch gekennzeichnet, daß** das Unterteil (1) der Vakuumkammer (V) Führungslaschen (9, 10, 11, 12, 13) mit korrigierenden Phasen (50, 51) für das Einsetzen des ersten permeablen Mittels (F1) und des zweiten permeablen Mittels (F2) in das Unterteil (1) aufweist.

10. Vakuumsystem nach Anspruch 9, **dadurch gekennzeichnet, daß** die Führungslaschen (9, 10, 11, 12, 13) zwei unterschiedliche Phasenwinkel (50, 51) aufweisen.

11. Vakuumsystem nach Anspruch 10, **dadurch gekennzeichnet, daß** der erste Phasenwinkel (50) ca. 30° und der zweite Phasenwinkel (51) ca. 2° beträgt.

12. Vakuumsystem nach einem der Ansprüche 6 bis 11, **dadurch gekennzeichnet, daß** das Unterteil (1) eine mit einer Phase versehene umlaufende Führungskante (20) aufweist, mit der das erste und das zweite permeable Mittel (F1, F2) beim Einsetzen in das Unterteil (1) der Vakuumkammer (V) in Berührung kommen.

13. Vakuumsystem nach einem der Ansprüche 6 bis 12, **dadurch gekennzeichnet**, das der Deckel (30) der Vakuumkammer (V) eine mit einer Phase versehene Führungskante (34) aufweist, die mit dem ersten permeablen Mittel (F1) beim Aufsetzen des Deckels (30) auf das Unterteil (1) in Berührung kommt.

14. Vakuumsystem nach Anspruch 12 oder 13, **dadurch gekennzeichnet, daß** der Phasenwinkel der Führungskante (34) 30° beträgt.

15. Vakuumsystem nach einem der Ansprüche 6 bis 14, **dadurch gekennzeichnet, daß** der Deckel (30) im Wandbereich Aussparungen (31, 32, 33) für einen Greifer eines Roboters (GR) aufweist.

16. Vakuumsystem nach einem der Ansprüche 6 bis 15, **dadurch gekennzeichnet, daß** der Deckel (30) eine Auflagefläche (35) zum Abdichten des oberen Filterträgers (F1) aufweist.

17. Vakuumsystem nach Anspruch 16, **dadurch gekennzeichnet, daß** das Verdichtungsmaterial für den oberen Filterträger (F1) eine Härte von 20 Shore aufweist.

18. Vakuumsystem nach einem der Ansprüche 6 bis 17, **dadurch gekennzeichnet, daß** an der Verbindungsstelle Deckel Unterteil (30, 1) die Abdichtung aus einer Kombination einem O-Ring (16) und einem unelastischen Dichtungsband (42) gebildet wird, wobei der O-Ring (16) mit 60 Shore und das Dichtungsband (42) mit 30 Shore dichtet.

19. Vakuumsystem nach Anspruch 18, **dadurch gekennzeichnet, daß** am unteren Filterträger (F2) über eine 60 Shore harte Dichtung (43) abgedichtet wird.

20. Vakuumsystem nach einem der Ansprüche 6 bis 19, **dadurch gekennzeichnet, daß** der Deckel (30) entsprechende Aufnahmen(37, 38, 39, 40, 41) zum Aufnehmen der Führungslaschen aufweist.

21. Vakuumsystem nach einem der Ansprüche 6 bis 20, **dadurch gekennzeichnet, daß** der obere Filterträger (F1) eine Anzahl N schlotförmiger Filterelemente aufweist, die zu einem Filterträger verbunden sind.

22. Vakuumsystem nach Anspruch 21, **dadurch gekennzeichnet, daß** der untere Filterträger (F2) N schlotförmige Filterelemente aufweist, die zu den Filterelementen (81, 83) des oberen Filterträgers (F1) korrespondieren und zu einem Filterträger verbunden sind.

23. Vakuumsystem nach Anspruch 22, **dadurch gekennzeichnet, daß** auf den entsprechenden vier Eckschlöten der beiden Filterträger (F1, F2) jeweils eine Abstandshülse (60) aufgebracht ist, die neben ihrer Funktion der Definition des Abstandes zwischen den beiden Filterträgern (F1, F2) die vertikale Korrektur von Fehlstellungen des unteren Trägers (F2) korrigieren, indem sie in Zentrierschächte (22, 23) des Unterteiles (1) der Vakuumkammer (V) eingreifen.

24. Vakuumsystem nach Anspruch 23, **dadurch gekennzeichnet, daß** die Abstandshülsen (60) eine zylindrische Form haben, wobei der Zylinder einen durchgehenden Spalt (61) in axialer Richtung aufweist, so daß das Vakuum auf die Eckschlöte einwirken kann.

25. Vakuumsystem nach Anspruch 24, **dadurch gekennzeichnet, daß** die Abstandshülsen (60) an ihren Stirnseiten (62)angephast sind.

26. Vakuumsystem nach einem der Ansprüche 23 bis 25, **dadurch gekennzeichnet, daß** die Länge der Abstandshülsen (60)derartig gewählt ist, daß sich die Auslaßspitzen (82) des oberen Filterträgers (F1) innerhalb der Schlote (81) des unteren Filterträgers (F2) befinden.

27. Vakuumsystem nach Anspruch 26, **dadurch gekennzeichnet, daß** die Auslaßspitzen (82) des oberen Filterträgers (F1) sich 1,5 mm innerhalb der Schlote (81) des unteren Trägers(F2) befinden.

28. Vakuumsystem nach einem der Ansprüche 23 bis 27, **dadurch gekennzeichnet, daß** die Abstandshülsen (60) aus Plexiglas sind.

29. Vakuumsystem nach einem der Ansprüche 1 bis 28, **dadurch gekennzeichnet, daß** die Vakuumkammer (V) aus Plexiglas, Glas oder Edelstahl entsprechender Stärke gefertigt ist.

30. Vakuumsystem nach einem der Ansprüche 1 bis 28, **dadurch gekennzeichnet, daß** die Vakuumkammer (V) durch ein Spritzgußverfahren oder Fräsverfahren hergestellt wird.

31. Vakuumsystem nach einem der Ansprüche 1 bis 30, **dadurch gekennzeichnet, daß** ein Unterteil (1) der Vakuumkammer (V) einen Absaugschacht (7) für den unteren Vakuumbereich und einen Absaugschacht (8) für den oberen Vakuumbereich aufweist.

32. Vakuumsystem nach einem der Ansprüche 1 bis 31, **dadurch gekennzeichnet, daß** jedes Ventil (V1, V2, V3) über eine eigene Ansteuerelektronik verfügt, die von der Kontrollsoftware über ein Decodiergerät von einem PC angesteuert werden kann.

33. Vakuumsystem nach einem der Ansprüche 1 bis 32, **dadurch gekennzeichnet, daß** weiter eine Trocknereinheit (T) zum Trocknen der Filterträger (F1, F2) vorgesehen ist.

34. Verfahren zur automatischen Plasmidpräparation mit einem Vakuumsystem nach einem der Ansprüche 1 bis 33, einem Pipettierroboter (PR) und einem Greifroboter (GR), wobei der Greifroboter (GR) die Filterträger (F1, F2) nach der Pipettierung durch den Pipettierroboter (PR) in die Vakuumkammer (V) einsetzt und den Deckel (30) schließt sowie nach Filtrierung die Vakuumkammer (V) öffnet und die Filterträger (F1, F2) entnimmt und der Weiterverarbeitung zuführt.

35. Verfahren nach Anspruch 34, **dadurch gekennzeichnet, daß** es von einem Rechner (PC) gesteuert wird.

## Claims

1. Vacuum system for the directed transport of a substance, comprising a vacuum chamber (V) which is provided with a first permeable means (F1) and a second permeable means (F2), which are arranged above each other, and
two vacuum regions, the upper vacuum region being defined by the space between the first permeable means (F1) and the second permeable means (F2), while the lower vacuum region is defined by the space between the second permeable means (F2) and the base of the vacuum chamber,
a vacuum pump (RD4),
a first electronically controlled valve (V1) for the lower vacuum region,
a second electronically controlled valve (V2) for the upper vacuum region, and
a first vacuum trap at the lower vacuum region for receiving a waste volume,
**characterised by** a third valve (V3) disposed upstream of the first electronic valve (V1) to break a vent vacuum in the lower vacuum region,
wherein in the upper and the lower vacuum region each a vacuum can be produced and adjusted independently of each other such that the substance is transported in two steps through the first permeable means (F1) and the second permeable means (F2) to the lower vacuum region.

2. Vacuum system according to claim 1, **characterised in that** the substance to be transported is a fluid, especially a liquid.

3. Vacuum system according to claim 1 or 2, **characterised in that** the vacuum system (V) has exactly two vacuum regions (VO, VU).

4. Vacuum system according to claim 3, **characterised in that** the first permeable means (F1) is formed by a filter support.

5. Vacuum system according to any one of claims 1 to 4, **characterised in that** the second permeable means (F2) is formed by a filter support.

6. Vacuum system according to any one of claims 1 to 5, **characterised in that** the vacuum system (V) has a cover (30) and a lower part (1).

7. Vacuum system according to claim 6, **characterised in that** the lower part (1) of the vacuum chamber (V) has a ledge (5) for supporting the second permeable means (F2).

8. Vacuum system according to claim 6 or 7, **characterised in that** there are provided in the side walls of the lower part (1) of the vacuum chamber (V) recesses (17, 18, 19) for the gripper of a robot (GR).

9. Vacuum system according to any one of claims 6 to 8, **characterised in that** the lower part (1) of the vacuum chamber (V) has guide tabs (9, 10, 11, 12, 13) having correcting bevels (50, 51) for the insertion of the first permeable means (F1) and the second permeable means (F2) into the lower part (1).

10. Vacuum system according to claim 9, **characterised in that** the guide tabs (9, 10, 11, 12, 13) have two different bevel angles (50, 51).

11. Vacuum system according to claim 10, **characterised in that** the first bevel angle (50) is about 30° and the second bevel angle (51) is about 2°.

12. Vacuum system according to any one of claims 6 to 11, **characterised in that** the lower part (1) has a bevelled peripheral guide edge (20), with which the first permeable means (F1) and the second permeable means (F2) come into contact on insertion into the lower part (1) of the vacuum chamber (V).

13. Vacuum system according to any one of claims 6 to 12, **characterised in that** the cover (30) of the vacuum chamber (V) has a bevelled guide edge (34), which comes into contact with the first permeable means (F1) when the cover (30) is put in place on the lower part (1).

14. Vacuum system according to claim 12 or 13, **characterised in that** the bevel angle of the guide edge (34) is 30°.

15. Vacuum system according to any one of claims 6 to 14, **characterised in that** the cover (30) has in its wall region recesses (31, 32, 33) for the gripper of a robot (GR).

16. Vacuum system according to any one of claims 6 to 15, **characterised in that** the cover (30) has a supporting surface (35) for sealing the upper filter support (F1).

17. Vacuum system according to claim 16, **characterised in that** the sealing material for the upper filter support (F1) has a hardness of 20 Shore.

18. Vacuum system according to any one of claims 6 to 17, **characterised in that** at the join between the cover (30) and the lower part (1) the seal is formed by a combination of an O-ring (16) and a resilient sealing strip (42), the O-ring (16) providing a seal of 60 Shore and the sealing strip (42) of 30 Shore.

19. Vacuum system according to claim 18, **characterised in that** at the lower filter support (F2) sealing is effected by a seal (43) having a hardness of 60 Shore.

20. Vacuum system according to any one of claims 6 to 19, **characterised in that** the cover (30) has corresponding receiving means (37, 38, 39, 40, 41) for receiving the guide tabs.

21. Vacuum system according to any one of claims 6 to 20, **characterised in that** the upper filter support (F1) has a number N of pipe-shaped filter elements that are connected to form a filter support.

22. Vacuum system according to claim 21, **characterised in that** the lower filter support (F2) has N pipe-shaped filter elements that correspond to the filter elements (81, 83) of the upper filter support (F1) and are connected to a filter support.

23. Vacuum system according to claim 22, **characterised in that** there is mounted on each of the corresponding four corner pipes of the two filter supports (F1, F2) a spacer sleeve (60) which, in addition to its function of defining the spacing between the two filter supports (F1, F2), also effects the vertical correction of misplacements of the lower support (F2) by engaging in centring shafts (22, 23) in the lower part (1) of the vacuum chamber (V).

24. Vacuum system according to claim 23, **characterised in that** the spacer sleeves (60) are cylindrical in shape, the cylinder having a through slot (61) in the axial direction so that the vacuum is able to act on the corner pipes.

25. Vacuum system according to claim 24, **characterised in that** the spacer sleeves (60) are bevelled on their end faces (62).

26. Vacuum system according to any one of claims 23 to 25, **characterised in that** the length of the spacer sleeves (60) is so selected that the outlet tips (82) of the upper filter support (F1) are located inside the pipes (81) of the lower filter support (F2).

27. Vacuum system according to claim 26, **characterised in that** the outlet tips (82) of the upper filter support (F1) are located 1.5 mm inside the pipes (81) of the lower support (F2).

28. Vacuum system according to any one of claims 23 to 27, **characterised in that** the spacer sleeves (60) are made of plexiglass.

29. Vacuum system according to any one of claims 1 to 28, **characterised in that** the vacuum chamber (V) is manufactured from plexiglass, glass, stainless steel of a suitable thickness.

30. Vacuum system according to any one of claims 1 to 28, **characterised in that** the vacuum chamber (V) is manufactured by an injection-moulding process or by a milling process.

31. Vacuum system according to any one of claims 1 to 30, **characterised in that** the lower part (1) of the vacuum chamber (V) has a suction shaft (7) for the lower vacuum region and a suction shaft (8) for the upper vacuum region.

32. Vacuum system according to any one of claims 1 to 31, **characterised in that** each valve (V1, V2, V3) has its own controlling electronics system which can be actuated by the control software via a decoding apparatus of a PC.

33. Vacuum system according to any one of claims 1 to 32, **characterised in that** also a dryer unit (T) for drying the filter supports (F1, F2) is provided.

34. Process for automatic plasmid preparation having a vacuum system according to any one of claims 1 to 33, a pipetting robot (PR) and a gripping robot (GR), wherein the gripping robot (GR) inserts the filter supports (F1, F2), after pipetting has been carried out by the pipetting robot (PR), into the vacuum chamber (V) and closes the cover (30) and, after filtering, opens the chamber (V) and removes the filter supports (F1, F2) and conveys them to a further processing step.

35. Process according to claim 34, **characterised in that** it is controlled by a computer (PC).

## Revendications

1. Système à vide pour le transport dirigé d'une substance, comprenant
une chambre à vide (V), qui contient un premier moyen (F1) perméable et un deuxième moyen (F2) perméable, disposés l'un au-dessus de l'autre, ainsi que deux zones de vide, la zone de vide supérieure étant définie par l'espace entre le premier moyen (F1) perméable et le deuxième moyen (F2) perméable, et la zone de vide inférieure par l'espace entre le deuxième moyen (F2) perméable et un fond de la chambre à vide, une pompe à vide (RD4),
une première vanne (V1) à réglage électronique pour la zone de vide inférieure,
une deuxième vanne (V2) à réglage électronique pour la zone de vide supérieure, et
un piège à vide (VF) disposé dans la zone de vide inférieure pour recevoir un volume de résidus,
**caractérisé par**
une troisième vanne (V3) disposée en amont de la première vanne (V1) à régulation électronique pour casser un vide résiduel dans la zone de vide inférieure,
un vide pouvant être produit et réglé de manière indépendante dans chacune des zones de vide supérieure et inférieure, de manière à transporter la substance dans la zone de vide inférieure, en deux étapes à travers le premier moyen (F1) perméable et le deuxième moyen (F2) perméable.

2. Système à vide selon la revendication 1, **caractérisé en ce que** la substance à transporter est un fluide, en particulier un liquide.

3. Système à vide selon la revendication 1 ou 2, **caractérisé en ce que** le système à vide (V) présente exactement deux zones de vide.

4. Système à vide selon la revendication 3, **caractérisé en ce que** le premier moyen (F1) perméable est formé d'un support-filtre.

5. Système à vide selon la revendication 1 à 4, **caractérisé en ce que** le deuxième moyen (F2) perméable est formé d'un support-filtre.

6. Système à vide selon la revendication 1 à 5, **caractérisé en ce que** le système à vide (V) comporte un couvercle (30) et une partie inférieure (1).

7. Système à vide selon la revendication 6, **caractérisé en ce que** la partie inférieure (1) de la chambre à vide (V) comporte une moulure (5) pour supporter le deuxième moyen (F2) perméable.

8. Système à vide selon la revendication 6 ou 7, **caractérisé en ce que** des échancrures (17, 18, 19) sont prévues dans les parois latérales de la partie inférieure (1) de la chambre à vide (V) pour une pince d'un robot (GR).

9. Système à vide selon une des revendications 6 à 8, **caractérisé en ce que** la partie inférieure (1) de la chambre à vide (V) comporte des pattes de guidage (9, 10, 11, 12, 13) avec des chanfreins (50, 51) de centrage pour la mise en place du premier moyen (F1) perméable et du deuxième moyen (F2) perméable dans la partie inférieure (1).

10. Système à vide selon la revendication 9, **caractérisé en ce que** les pattes de guidage (9, 10, 11, 12, 13) présentent deux angles de chanfreins (50, 51) différents.

11. Système à vide selon la revendication 10, **caractérisé en ce que** le premier angle de chanfrein (50) est d'environ 30° et le deuxième angle de chanfrein (51) d'environ 2°.

12. Système à vide selon une des revendications 6 à 11, **caractérisé en ce que** la partie inférieure (1) comporte un bord de guidage circonférenciel (20) pourvu d'un chanfrein avec lequel le premier et le deuxième moyens (F1, F2) perméables viennent en contact lors de la mise en place dans la partie inférieure (1) de la chambre à vide (V).

13. Système à vide selon une des revendications 6 à 12, **caractérisé en ce que** le couvercle (30) de la chambre à vide (V) comporte un bord de guidage (34) pourvu d'un chanfrein qui vient en contact avec le premier moyen (F1) perméable lors de la mise en place du couvercle (30) sur la partie inférieure (1).

14. Système à vide selon la revendication 12 ou 13, **caractérisé en ce que** l'angle de chanfrein du bord de guidage (34) est de 30°.

15. Système à vide selon une des revendications 6 à 14, **caractérisé en ce que** le couvercle (30), dans la région des parois, présente des échancrures (31, 32, 33) pour une pince d'un robot (GR).

16. Système à vide selon une des revendications 6 à 15, **caractérisé en ce que** le couvercle (30) présente une surface d'appui (35) pour assurer l'étanchéité du support-filtre (F1) supérieur.

17. Système à vide selon la revendication 16, **caractérisé en ce que** le matériau d'étanchéité pour le support-filtre (F1) supérieur a une dureté de 20 Shore.

18. Système à vide selon une des revendications 6 à 17, **caractérisé en ce qu'**au niveau de l'assemblage couvercle-partie inférieure (30, 1), le moyen d'étanchéité est formé d'une combinaison d'un joint torique (16) et d'une bande d'étanchéité (42) non élastique, le joint torique (16) rendant étanche avec une dureté de 60 Shore et la bande d'étanchéité (42) avec une dureté de 30 Shore.

19. Système à vide selon la revendication 18, **caractérisé en ce que** l'étanchéité au niveau du support-filtre (F2) inférieur est assurée par un joint (43) de dureté de 60 Shore.

20. Système à vide selon une des revendications 6 à 19, **caractérisé en ce que** le couvercle (30) présente des logements (37, 38, 39, 40, 41) pour recevoir les pattes de guidage.

21. Système à vide selon une des revendications 6 à 20, **caractérisé en ce que** le support-filtre (F1) supérieur comporte un nombre N d'éléments filtrants en forme de cheminées, qui sont réunis en un support-filtre.

22. Système à vide selon la revendication 21, **caractérisé en ce que** le support-filtre (F2) inférieur comporte N éléments filtrants en forme de cheminées, qui correspondent aux éléments filtrants (81, 83) du support-filtre (F1) supérieur et sont réunis en un support-filtre.

23. Système à vide selon la revendication 22, **caractérisé en ce que** sur chacun des quatre éléments filtrants d'angle en forme de cheminée des deux supports-filtres (F1, F2) est disposé un manchon-entretoise (60), qui en plus de sa fonction de maintien de l'écartement entre les deux supports-filtres (F1, F2), corrige les défauts de positionnement vertical du support inférieur (F2) en s'engageant dans des puits de centrage (22, 23) de la partie inférieure (1) de la chambre à vide (V).

24. Système à vide selon la revendication 23, **caractérisé en ce que** les manchons-entretoises (60) ont une forme cylindrique, les cylindres présentant dans la direction axiale une fente continue (61) afin que le vide puisse opérer sur les éléments d'angles en forme de cheminées.

25. Système à vide selon la revendication 24, **caractérisé en ce que** les manchons-entretoises (60) sont chanfreinés au niveau de leurs faces frontales (62).

26. Système à vide selon une des revendications 23 à 25, **caractérisé en ce que** la longueur des manchons entretoises (60) est choisie de telle sorte que les extrémités de sortie (82) du support-filtre (F1) supérieur soient situées à l'intérieur des éléments formant cheminées (81) du support-filtre (F2) inférieur.

27. Système à vide selon la revendication 26, **caractérisé en ce que** les extrémités de sortie (82) du support-filtre (F1) supérieur sont situées 1,5 mm à l'intérieur des éléments formant cheminées (81) du support-filtre (F2) inférieur.

28. Système à vide selon une des revendications 23 à 27, **caractérisé en ce que** les manchons-entretoises (60) sont en plexiglas.

29. Système à vide selon une des revendications 1 à 28, **caractérisé en ce que** la chambre à vide (V) est en plexiglas, en verre ou en acier spécial d'épaisseur adaptée.

30. Système à vide selon une des revendications 1 à 28, **caractérisé en ce que** la chambre à vide (V) est fabriquée par un procédé de moulage injection ou procédé de fraisage

31. Système à vide selon une des revendications 1 à 30, **caractérisé en ce qu'**une partie inférieure (1) de la chambre à vide (V) comporte un évent d'aspiration (7) pour la zone à vide inférieure et un évent d'aspiration (8) pour la zone à vide supérieure.

32. Système à vide selon une des revendications 1 à 31, **caractérisé en ce que** chaque vanne (V1, V2, V3) dispose d'une électronique de commande propre, qui peut être commandée par le logiciel de contrôle, via un appareil de décodage d'un ordinateur individuel.

33. Système à vide selon une des revendications 1 à 32, **caractérisé en ce qu'**il est prévu en outre une unité de séchage (T) pour le séchage des supports-filtres (F1, F2).

34. Procédé de préparation automatique de plasmides à l'aide d'un système à vide selon une des revendications 1 à 33, un robot de pipetage (PR) et un robot de manutention (GR), le robot de manutention (GR) mettant les support-filtres (F1, F2) en place dans la chambre à vide (V) et fermant le couvercle (30), après l'opération de pipetage effectuée par le robot de pipetage (PR), et, après le filtrage, ouvrant la chambre à vide (V), prélevant les support-filtres (F1, F2) et les acheminant pour la poursuite du traitement.

35. Procédé selon la revendication 34, **caractérisé en ce qu'**il est commandé par un ordinateur (ordinateur individuel).
